# EUROPÄISCHE PATENTSCHRIFT

(11) **EP 3 617 068 B1**
(45) Veröffentlichungstag und Bekanntmachung des Hinweises auf die Patenterteilung: **16.06.2021**
(21) Anmeldenummer: 19195107.8
(22) Anmeldetag: 03.09.2019
(51) Int. Cl.: B64C 39/02, F41B 9/00, F41H 11/00

(54) **BAUKASTEN UND VERFAHREN ZUR LUFTGESTÜTZTEN DEKONTAMINATION**
CONSTRUCTION BOX AND METHOD FOR AIRBORNE DECONTAMINATION
SYSTÈME MODULAIRE ET PROCÉDÉ DE DÉCONTAMINATION AÉROPORTÉ

(30) Priorität: 03.09.2018 DE 102018121401
(43) Veröffentlichungstag der Anmeldung: 04.03.2020
(73) Patentinhaber: Kärcher Futuretech GmbH, 71409 Schwaikheim (DE)
(72) Erfinder: Fritz, Daniel, 73663 Berglen (DE); Weisenberger, Sven, 70565 Stuttgart (DE); Mühleisen, Rainer, 71394 Kernen (DE); Marcus, Patrick, 76187 Karlsruhe (DE); Popp, Thomas, 70174 Stuttgart (DE)
(74) Vertreter: Witte, Weller & Partner Patentanwälte mbB

(56) Entgegenhaltungen:
- CN-A- 108 010 598
- CN-U- 206 846 972
- US-A1- 2016 304 201
- US-A1- 2018 075 417

## Beschreibung

Die vorliegende Offenbarung befasst sich mit Systemen und Bausätzen sowie mit Verfahren zur Dekontamination. Insbesondere befasst sich die vorliegende Offenbarung mit Anordnungen und Vorrichtungen, die zur Verwendung im Rahmen militärischer und/oder humanitärer Operationen geeignet sind. Ferner befasst sich die vorliegende Offenbarung mit Verfahren zum Betreiben derartiger Anordnungen und Vorrichtungen.

Militärische und/oder humanitäre Operationen finden regelmäßig in Gebieten statt, in denen keine oder nur eine ungenügende Infrastruktur vorhanden ist, sodass wesentliche Funktionen autark bereitgestellt und abgesichert werden müssen.

Eine oftmals unterschätzte Bedrohung entsteht durch die Freisetzung von Kontaminanten, die ein hohes Gefährdungspotential für Mensch und Umwelt haben und bei versehentlicher, falscher oder missbräuchlicher Anwendung kollaterale Schäden hervorrufen können. Ebenfalls können beispielsweise gezielte Einsätze bei militärischen Auseinandersetzungen oder Terrorangriffen zu einer möglichen Gefährdung durch die Freisetzung chemischer (C), biologischer (B), radiologischer (R) und/oder nuklearer (N) Gefahrenstoffe führen (CBRN-Vorfälle). Eine solche CBRN-Kontamination kann zu einer großen Anzahl von zivilen Opfern und (Langzeit-) Geschädigten führen und zudem urbane Bereiche, Infrastruktur und Gerätschaften großflächig und über lange Zeit gefährlich belasten. Um nach dem Auftreten eines solchen Zwischenfalls die unmittelbaren Schäden abzuschwächen und das Auftreten von Folgeschäden zu begrenzen, sind verschiedene Dekontaminationsstrategien notwendig.

Unter Dekontamination, ist im Rahmen der vorliegenden Offenbarung allgemein das Entfernen von potentiellen gefährlichen Verunreinigungen von Personen, Objekten, Gebäuden und/oder ungeschützten Flächen zu verstehen. Damit gehört die Dekontamination zum sogenannten ABC-Schutz.

Maßnahmen zur Dekontamination beinhalten beispielsweise ein Entstrahlen, Entseuchen und Entgiften, wobei abhängig von der Art der Kontamination unterschiedliche Dekontaminationsmedien und Vorgehensweisen zum Einsatz kommen. Abhängig von der Art der Dekontamination können beispielsweise wässrige oder nichtwässrige Dekontaminationsmedien, Heißdampf oder eine Kombination daraus zur Anwendung kommen. Ebenfalls sind gasförmige und/oder pulverförmige Dekontaminationsmedien anwendbar. Des Weiteren kann es bei einer Dekontamination notwendig sein, Personen und/oder Gegenstände von "normalem" Schmutz zu befreien.

Es versteht sich, dass der Begriff Dekontamination im Rahmen der vorliegenden Offenbarung regelmäßig nicht dahin zu verstehen ist, dass eine vollständige Dekontamination erfolgen muss. Es ist auch möglich, die im Rahmen der vorliegenden Offenbarung beschriebenen Aspekte und Ausgestaltungen für eine Behelfsdekontamination zu nutzen, wenn (z.B. einsatzbedingt) keine weiterführende Dekontamination möglich ist. Beispielhaft umfasst der Begriff Dekontamination einen Vorgang, bei dem Objekte, Flächen oder dergleichen, die zuvor nur mit Schutzausrüstung einer hohen Schutzklasse betreten oder gehandhabt werden dürfen, derart dekontaminiert werden, dass hiernach ein Betreten oder eine Handhabung mit Schutzausrüstung einer niedrigeren Schutzklasse möglich ist. Gleichwohl liegt dann immer noch eine gewisse Kontamination vor.

Es muss bei der Dekontamination darauf geachtet werden, dass Bedienpersonen für das Dekontaminationssystem nach Möglichkeit nicht - oder nur so wenig wie möglich - mit den Kontaminanten in Berührung kommen. Dieser Grundsatz kann bei Dekontaminationen, die unter besonderen Umständen stattfinden (etwa Zeitdruck, mangelnde Ausrüstung), nicht immer eingehalten werden. Dies kann etwa bei der sog. Sofortdekontamination auftreten, bei der beispielsweise Personen, Ausrüstung, Gegenstände und Gebäude unmittelbar nach einem CBRN-Ereignis zu Dekontaminieren sind. Ferner kann dies bei der Behelfsdekontamination auftreten, bei der nach einem Auftreten eines CBRN-Zwischenfalls kritische Bereiche/Gerätschaften zumindest vorübergehend und in eingeschränkter Weise weiter begehbar/nutzbar bleiben müssen.

US2016/0304201 A offenbart eine Drohne mit Dekontaminationsfähigkeiten (Diagnose und Sprühen von Flüssigkeiten).

Zur Dekontamination in abgelegenen Bereichen, beispielsweise in Krisen- oder Kriegsgebieten, ist aus der WO 2018/108237 A1 eine mobile Dekontaminationseinheit bekannt, die an einen Einsatzort verbracht werden kann und dort zum Ausbringen verschiedener Dekontaminationsmittel nutzbar ist.

Eine solche mobile Dekontaminationsanlage erfordert für den Betrieb zumindest eine Bedienperson, die unmittelbar bei der Dekontaminationsanlage tätig und folglich je nach Einsatzort weiterhin einer hohen Gefährdung (gerade bei Sofortdekontaminationsmaßnahmen) ausgesetzt bleibt.

Vor diesem Hintergrund ist es eine Aufgabe der vorliegenden Erfindung, ein mobiles Dekontaminationssystem zur Dekontamination kontaminierter Personen, Gegenstände, Gebäude und/oder Geländeabschnitte bereitzustellen, wobei dies nach Möglichkeit mit einer deutlich verringerten Kontaminanten-Exposition für den Bediener einhergeht. Ferner soll das Dekontaminationssystem einfach bedienbar und flexibel einsetzbar sein. Auch in Anwendungsfällen, bei denen widrige Umgebungsbedingungen herrschen, soll eine hohe Dekontaminationsleistung ermöglicht sein.

In Bezug auf das Dekontaminationssystem wird die Aufgabe durch einen Bausatz zur luftgestützten Dekontamination mit zumindest einem unbemannten Luftfahrzeug, insbesondere einer rotorbetriebenen Drohne, gelöst, die eine Antriebseinheit, eine Energieversorgung und zumindest eine Schnittstelle zur Ankopplung eines Dekontaminationsmoduls aufweist. Der Bausatz weist ferner einen Satz von Dekontaminationsmodulen zur Ankopplung an die Schnittstelle des unbemannten Luftfahrzeugs, umfassend zumindest ein Diagnosemodul zur Erfassung eines Kontaminationszustands und zumindest ein Behandlungsmodul zur Dekontamination, wobei das zumindest eine Diagnosemodul zumindest einen Sensor zur Erfassung des Kontaminationszustands aufweist, und wobei das zumindest eine Behandlungsmodul zur Erzeugung und/oder zur Nutzung einer Fluidströmung zu Dekontaminationszwecken ausgebildet ist. Ferner weist der Bausatz eine Steuereinheit für das unbemannte Luftfahrzeug auf.

Ferner wird die Aufgabe durch die Verwendung eines unbemannten Luftfahrzeugs, insbesondere einer rotorbetriebenen Drohne, zur luftgestützten Dekontamination gelöst, insbesondere im Rahmen militärischer und/oder humanitärer Operationen. Insbesondere umfasst die Verwendung eine Nutzung des unbemannten Luftfahrzeugs zur Durchführung des Verfahrens gemäß einer der hierin beschriebenen Ausführungsformen.

Ferner wird die Aufgabe durch ein Verfahren zur Dekontamination gelöst, das die folgenden Schritte aufweist: Bereitstellung eines unbemannten Luftfahrzeugs, insbesondere einer rotorbetriebenen Drohne, das eine Antriebseinheit, eine Energieversorgung und zumindest eine Schnittstelle zur Ankopplung eines Dekontaminationsmoduls aufweist; Bereitstellung eines Satzes von Dekontaminationsmodulen zur Ankopplung an die Schnittstelle des unbemannten Luftfahrzeugs, umfassend zumindest ein Diagnosemodul zur Erfassung eines Kontaminationszustands, und zumindest ein Behandlungsmodul zur Dekontamination; Auswahl zumindest eines Dekontaminationsmoduls aus der bereitgestellten Mehrzahl von Dekontaminationsmodulen; Kopplung des zumindest einen Dekontaminationsmoduls mit der Schnittstelle des unbemannten Luftfahrzeugs; und Durchführung einer Dekontamination.

Im Rahmen der vorliegenden Offenbarung bezieht sich der Begriff luftgestützte Dekontamination darauf, dass sich das unbemannte Luftfahrzeug zumindest während einer Phase der Dekontamination zumindest zeitweise in der Luft befindet.

Der offenbarungsgemäße Bausatz zur luftgestützten Dekontamination hat den Vorteil, dass das unbemannte Luftfahrzeug aufgrund der modularen Bauweise bzw. des modularen Aufbaus in Abhängigkeit von einer konkret auftretenden CBRN-Gefahrenlage mit einer Mehrzahl unterschiedlicher Dekontaminationsmodule ausrüstbar ist, wobei die einzelnen Dekontaminationsmodule zur Ausführung einer Vielzahl unterschiedlicher Aufgaben eingerichtet sein können. Die Modularität wird u. a. durch den Satz von Dekontaminationsmodulen gewährleistet, die zur Ankopplung an die zumindest eine Schnittstelle des unbemannten Luftfahrzeuges eingerichtet sind.

Ein weiterer Vorteil des offenbarungsgemäßen Bausatzes zur luftgestützten Dekontamination ist die Nutzung eines unbemannten Luftfahrzeugs, wodurch eine Gefährdung des Bedieners in weitgehend ausgeschlossen werden kann. Somit können beispielsweise auch in sog. Hochrisiko-Einsatzgebieten kontaminierte Objekte unter Verwendung des Bausatzes zur luftgestützten Dekontamination beispielsweise direkt im Nachgang an ein CBRN-Ereignis dekontaminiert werden.

Der offenbarungsgemäße Bausatz kann auch als modularer Bausatz, Baukasten oder Kit bezeichnet werden. Der Bausatz umfasst Komponenten, die fallweise ausgewählt werden können und für die Dekontamination nutzbar sind.

Bei dem unbemannten Luftfahrzeug handelt es sich vorzugsweise um eine rotorbetriebene Drohne, die entweder mittels eines Autopiloten über den zu dekontaminierenden Bereich, oder aus der Ferne, beispielsweise aus einer Leitwarte heraus, oder über eine händisch bedienbare Fernsteuerung, gesteuert werden kann.

Als Antriebseinheit können beispielsweise aus der Luftfahrt bekannte Propellertriebwerke/Rotortriebwerke, in anderen Ausführungen auch Strahltriebwerke, Verwendung finden. Beispielsweise kommen Drohnen mit vier Propellertriebwerken, sogenannte Quadrocopter, bei denen die Propellertriebwerke jeweils als Vertikalläufer ausgeführt sind, oder Drohnen mit zwei Propellertriebwerken, sogenannte Duocopter, bei denen die Propellertriebwerke ebenfalls als Vertikalläufer ausgeführt sind, zum Einsatz. Es sind auch Drohnen mit sechs, acht oder mehr Propellern/Rotoren bekannt und nutzbar.

Zur Energieversorgung können beispielsweise leistungsstarke, vollautarke Batteriemodule (beispielsweise Batterien auf Lithiumbasis) direkt in dem unbemannten Luftfahrzeug verbaut sein. In anderen Ausführungen kann das unbemannte Luftfahrzeug auch mit Kraftstoff, vorzugsweise Flugbenzin oder dgl., versorgt werden und als Antriebseinheit(en) einen oder mehrere Verbrennungsmotoren aufweisen. Ebenfalls sind Systeme denkbar, bei denen Brennstoffzellen zur Energieversorgung zum Einsatz kommen. Befindet sich der Einsatzort in einem begehbaren Gelände, kann das Luftfahrzeug auch über eine stationäre Energieversorgung, beispielsweise einen Generator oder Netzanschluss, versorgt werden, insbesondere über ein Versorgungskabel.

Die zumindest einen Schnittstelle zur Ankopplung des Dekontaminationsmoduls kann auch ein Bestandteil einer Mehrzahl von Schnittstellen sei, die dazu eingerichtet sind, verschiedene Dekontaminationsmodule aufzunehmen. Vorzugsweise verfügen die einzelnen Dekontaminationsmodule über eine standardisierte Schnittstelle, so dass der Bausatz zur luftgestützten Dekontamination je nach Einsatzort und Einsatzzweck adaptiv erweiterbar/anpassbar ist. Die Schnittstelle kann vorzugsweise an einer Montageplattform der Drohne, beispielsweise an einem Unterboden der Drohne, vorgesehen sein.

Das Diagnosemodul zur Erfassung eines Kontaminationszustandes ist beispielsweise dazu eingerichtet, über eine geeignete Sensorik Informationen betreffen die Art der Kontaminierung (chemisch, biologisch, radiologisch und/oder nuklear) sowie den Kontaminationsgrad zu ermitteln, so dass ein für den Einsatz ausgelegtes Dekontaminationsprogramm ausgeführt bzw. ein geeignetes Behandlungsmodul ausgewählt werden kann.

Das Behandlungsmodul zur Dekontamination kann beispielsweise eine oder mehrere Pumpen aufweisen. Zudem kann das Behandlungsmodul eine oder mehrere Düsen aufweisen, über die ein Dekontaminationsmittel oder ein Dekontaminationsmittelgemisch (das beispielsweise zwei Dekontaminationsmittel aufweist) in Richtung auf das kontaminierte Objekt (Person, Gegenstand und/oder Gebiet) ausgebracht werden kann.

Die Steuereinheit kann beispielsweise als leistungsstarker Mikrokontroller, System-on-a-Chip (SoC) oder Embedded System ausgestaltet sein. Vorzugsweise ist die Steuereinheit updatefähig ausgeführt, so dass spezifische Programmabläufe zur Dekontamination auf den jeweiligen Vorfall anpassbar sind und für den späteren Einsatz in die Steuereinheit geladen und von dieser ausgeführt werden können. Vorzugsweise weist die Steuereinheit einen internen und/oder externen Speicher zur Speicherung von Daten, Informationen und/oder Programmabläufen auf.

In einer weiteren Ausgestaltung weist der Bausatz zur luftgestützten Dekontamination ferner das Merkmal auf, dass zumindest ein Vorratsbehälter für ein Dekontaminationsmittel an dem unbemannten Luftfahrzeug angeordnet und/oder mit diesem gekoppelt ist. Ein solcher Vorratsbehälter für ein Dekontaminationsmittel hat den Vorteil, dass der Bausatz auch in unwegsamem Gelände, in welchem beispielsweise kein Weiterkommen von bodenseitigen Einsatzkräften möglich ist, ein Dekontaminationseinsatz durchführbar ist. Der Vorratsbehälter kann beispielsweise in Form von einem oder mehreren, vorzugsweise chemikalienresistenten, Tanks an dem unbemannten Luftfahrzeug angeordnet sein.

In einer weiteren Ausgestaltung weist der Bausatz ferner das Merkmal auf, dass zumindest ein Behandlungsmodul zur Dekontamination dazu eingerichtet ist, ein flüssiges, pulverförmiges und/oder gasförmiges Dekontaminationsmittel zu zerstäuben. Das Zerstäuben hat den besonderen Vorteil, dass selbst raue und/oder poröse Oberflächen durch das fein zerstäubte Dekontaminationsmittel gereinigt werden können, da die fein zerstäubten Partikel selbst in kleinste Zwischenräume eindringen.

In einer weiteren Ausgestaltung weist der Bausatz ferner das Merkmal auf, dass zumindest ein Behandlungsmodul zur nasschemischen Dekontamination ausgebildet ist. Unter der nasschemischen Dekontamination wird im Rahmen der vorliegenden Offenbarung die Dekontamination mittels eines flüssigen, chemischen Dekontaminationsmittels verstanden. Die dabei verwendeten Dekontaminationsmittel können über bekannte Pump- und Sprühsysteme ausgebracht werden.

In einer weiteren Ausgestaltung weist der Bausatz ferner das Merkmal auf, dass das Behandlungsmodul zur nasschemischen Dekontamination mit zumindest einer bodengebundenen Dekontaminationsmittel-Versorgungsleitung für ein Dekontaminationsmittel verbindbar ist. Ein Vorteil dieser Ausgestaltung ist, dass eine solche bodengebundene Dekontaminationsmittel-Versorgungsleitung an einen Tank mit sehr großem Volumen angekoppelt sein kann, wodurch ein Einsatz des unbemannten Luftfahrzeugs über einen sehr langen Zeitraum bzw. auf einem sehr großen Gebiet gewährleistbar ist. Die bodengebundene Dekontaminationsmittel-Versorgungsleitung ist beispielsweise mit einem unbemannten autonom fahrenden Tankfahrzeug verbunden, welches mit dem unbemannten Luftfahrzeug in Kommunikationsverbindung steht und diesem während eines Einsatzes in einem großflächigen Gebiet, beispielsweise auf Grundlage von satellitengestützten oder anderweitig ermittelten Positionsinformationen, nachfolgt.

In einer weiteren Ausgestaltung weist der Bausatz ferner das Merkmal auf, dass das Behandlungsmodul dazu eingerichtet ist, ein Dekontaminationsmittel und/oder eine mit einem Dekontaminationsmittel versehene Dekontaminationsmittellösung auszubringen. Ein solches Ausbringen kann beispielsweise über Sprüh-, Schütt- oder Streusysteme erfolgen. Ebenfalls ist es vorstellbar, dass beispielsweise ein Wurfkörper oder eine Vielzahl von Wurfkörpern abgeworfen werden, in denen ein Dekontaminationsmittel oder eine Dekontaminationsmittellösung enthalten ist, wobei eine Freisetzung des Dekontaminationsmittels beim Auftreffen des Wurfkörpers auf dem Boden erfolgt.

In einer weiteren Ausgestaltung weist der Bausatz ferner das Merkmal auf, dass zumindest ein Dekontaminationsmodul als Überwachungsmodul zur Überwachung des Dekontaminationsablaufs ausgebildet ist. Dies hat den Vorteil, dass der Dekontaminationsvorgang für den Bediener vorzugsweise aus einer sicheren Entfernung (beispielsweise aus einem Schutzraum) bzw. in sicherer Umgebung überwachbar ist, wodurch etwaige Änderungen in dem Programmablauf des Dekontaminationseinsatzes berücksichtig werden können.

In einer weiteren Ausgestaltung weist der Bausatz ferner das Merkmal auf, dass der Satz von Dekontaminationsmodulen Dekontaminationsmodule für eine mehrstufige Dekontamination aufweist, insbesondere zur Vorbehandlung, Hauptbehandlung und/oder Nachbehandlung. Dies hat den Vorteil, dass eine ganzheitliche Dekontamination eines Dekontaminationsobjektes (eine Gebietes, eines Gegenstandes und/oder einer Person) gewährleistet werden kann. Beispielsweise ist es möglich, ein erstes Dekontaminationsmodul zur Vorbehandlung eines kontaminierten Umfelds, ein zweites Dekontaminationsmodul zur Hauptbehandlung des kontaminierten Umfelds sowie ein drittes Dekontaminationsmodul zur Nachbehandlung des kontaminierten Umfelds einzusetzen. Folglich wird eine noch bessere Beseitigung der verbliebenen Kontaminanten ermöglicht.

In einer weiteren Ausgestaltung weist der Bausatz zur luftgestützten Dekontamination ferner das Merkmal auf, dass das unbemannte Luftfahrzeug mit zumindest einem ersten bildgebenden Sensor versehen ist, wobei über die Steuereinrichtung eine Steuerung des unbemannten Luftfahrzeugs für einen Bediener ohne direkte Sicht ermöglicht ist. Der zumindest eine bildgebende Sensor kann zur Erfassung sichtbarer Strahlung, aber auch zur Erfassung nicht-sichtbarer Strahlung (IR, UV, etc.) ausgebildet sein.

Ein solcher erster bildgebender Sensor kann beispielsweise in Form einer oder einer Mehrzahl von Kameras realisiert sein, deren Bilder auf eine Bedieneinheit eines Bedieners übertragbar sind, der anhand der empfangenen Bilder das unbemannte Luftfahrzeug über das kontaminierte Gebiet lenken kann. Der Bediener kann beispielsweise in einem Schutzraum untergebracht sein, in dem er vor einer etwaigen CBRN-Gefährdung besser geschützt ist. Der Bediener kann von dort aus das unbemannte Luftfahrzeug über das kontaminierte Gebiet/Objekt zur Erfüllung der Dekontaminationsaufgabe lenken.

In einer weiteren Ausgestaltung weist der Bausatz ferner das Merkmal auf, dass die Energieversorgung eine kabelgebundene Energieversorgung umfasst. Diese Ausgestaltung ist denkbar, wenn das kontaminierte Gebiet in der näheren Umgebung einer noch funktionierenden Infrastruktur liegt (beispielsweise bei einem Industrieunfall) und somit die Energieversorgung des unbemannten Luftfahrzeugs über das vorhandene Stromnetz gedeckt werden kann. Es ist jedoch auch vorstellbar, einen bodengestützten Energieversorger (Stromgenerator) zu verwenden. Durch die kabelgebundene Energieversorgung ist es möglich, den Einsatz des unbemannten Luftfahrzeuges nicht auf eine Dauer des zur Verfügung stehenden internen Energiespeichers zu begrenzen. Dies ist gerade bei langwierigen Einsätzen vorteilhaft. Ferner steigt die Nutzlast des Luftfahrzeugs, wenn ein interner Energiespeicher schwerer ist als die (teilweise angehobene) Energieversorgungsleitung.

In einer weiteren Ausgestaltung weist der Bausatz ferner das Merkmal auf, dass eine Düsenanordnung mit zumindest einer Düse vorgesehen ist, die das Dekontaminationsmittel gezielt in die Eigenluftströmung des unbemannten Luftfahrzeugs einbringt. Beispielhaft ist die zumindest eine Düse dazu eingerichtet, ein punktförmiges, linienförmiges oder flächenförmiges Strahlbild zu erzeugen.

Das gezielte Einbringen des Dekontaminationsmittels in die Eigenluftströmung des unbemannten Luftfahrzeuges mittels einer Düse hat den Vorteil, dass die zerstäubten Partikel des Dekontaminationsmittels durch die Eigenluftströmung feiner verteilt und somit homogener auf der zu kontaminierenden Oberfläche auftreffen. Zudem sind Synergieeffekte nutzbar, da die Bewegungskomponente der zerstäubten Partikel des Dekontaminationsmittels mit der Bewegungskomponente (der Gegenkraft zur Rotorblattauftriebskraft) des/der Rotor(en) übereinstimmt.

Ferner kann die Eigenluftströmung auch zum Zerstäuben des Dekontaminationsmittels genutzt werden oder zumindest dazu beitragen, falls die erforderlich ist.

In einer weiteren Ausgestaltung weist der Bausatz ferner das Merkmal auf, dass die Steuereinrichtung separat (beabstandet) von dem unbemannten Luftfahrzeug angeordnet ist oder zumindest teilweise in dieses integriert ist. Eine zumindest teilweise integrierte Steuereinrichtung hat den Vorteil, dass die Autarkie des Systems gesteigert werden kann.

In einer weiteren Ausgestaltung weist der Bausatz ferner das Merkmal auf, dass die Steuereinrichtung zumindest einen Betriebsmodus aufweist, in dem die Antriebseinheit des zumindest einen unbemannten Luftfahrzeugs derart angesteuert wird, dass eine gezielte Richtung der Eigenluftströmung des Luftfahrzeugs auf ein Dekontaminationsobjekt ermöglicht ist.

Eine solche Leitung der Eigenluftströmung kann beispielsweise dadurch erreicht werden, dass die Steuereinrichtung einen oder mehrere Blattneigungswinkel der Rotorblätter verstellt, oder separat an dem unbemannten Luftfahrzeug vorhandene Leitschaufeln ansteuert, die die entgegen der Auftriebskraft gerichtete Luftströmung in Richtung des zu dekontaminierenden Objektes lenken. Ein Vorteil dieser Ausgestaltung ist, dass nicht nur Ziele anvisierbar sind, die lotrecht unterhalb der Drohne angeordnet sind, sondern auch solche, die sich in einer angrenzenden Umgebung befinden. Der anvisierbare Radius ist dabei abhängig von dem maximalen möglichen Ablenkwinkel der Eigenluftströmung und/oder von den Flugeigenschaften des Luftfahrzeugs.

Mit anderen Worten kann ein spezieller Flugmodus vorgesehen sein, in dem das Luftfahrzeug mit dem Ziel betrieben wird, bestimmte Bereiche mit seiner Eigenluftströmung anzustrahlen. Richtung, Orientierung, Geschwindigkeit und Anstellwinkel können entsprechend gewählt werden.

In einer weiteren Ausgestaltung weist der Bausatz ferner das Merkmal auf, dass die Steuereinrichtung zur Erkennung von Strukturen auf Basis von Bildinformationen, die durch den zumindest einen bildgebenden Sensor bereitgestellt werden, ausgebildet ist. Dies hat den Vorteil, dass beispielsweise verschiedene Untergründe, Objekte und/oder Personen, die vorzugsweise in einer Datenbank als Referenzbilder abgespeichert sein können, mit den Bildinformationen der durch den zumindest ersten bildgebenden Sensor aufgenommenen Bilddaten abgleichbar sind. Dadurch kann die Steuereinrichtung des unbemannten Luftfahrzeugs beispielsweise einen Volumenstrom des auszubringenden Dekontaminationsmittels abhängig von der erkannten Struktur steuern. Ferner kann die Flugsteuerung auf diese Daten zurückgreifen, etwa zur Kollisionsvermeidung.

In einer weiteren Ausgestaltung weist der Bausatz ferner das Merkmal auf, dass die Steuereinrichtung dazu ausgestaltet ist, auf Basis von Bildinformationen, die durch den zumindest ersten bildgebenden Sensor bereitgestellt werden, einen Kontaminationsgrad zu bestimmen. Hierbei können vorzugsweise einzelne Bildinformationen dazu verwendet werden, auf Grundlage von Vergleichen mit jeweiligen Referenzdaten einen lokal vorhandenen Kontaminierungsgrad zu bestimmen. Es sei erwähnt, dass die Bestimmung des Kontaminierungsgrades auf Grundlage von Referenzdaten nicht nur mittels eines bildgebenden Sensors, sondern auch über einen oder mehrere nicht-bildgebende Sensoren, die an dem oder in dem unbemannten Luftfahrzeug angeordnet sein können, erfolgen kann. Der zumindest eine bildgebende Sensor kann zur Erfassung sichtbarer Strahlung, aber auch zur Erfassung nicht-sichtbarer Strahlung (IR, UV, etc.) ausgebildet sein.

In einer weiteren Ausgestaltung weist der Bausatz ferner das Merkmal auf, dass das zumindest eine unbemannte Luftfahrzeug mit zumindest einem Abstandssensor versehen ist, um eine Umgebung des unbemannten Luftfahrzeugs zu überwachen. Dies hat den Vorteil, dass beispielsweise die Entfernung zu einem zu dekontaminierenden Objekt bestimmbar ist. Folglich kann beispielsweise die Stärke des Volumenstroms des Dekontaminierungsmittels (Ausbringrate) angepasst werden. Ferner können Kollisionen mit Objekten bzw. weiteren unbemannten Luftfahrzeugen verhindert werden.

In einer weiteren Ausgestaltung weist der Bausatz ferner das Merkmal auf, dass die Steuereinrichtung dazu ausgestaltet ist, die Bildinformationen und Abstandsinformationen miteinander zu verknüpfen. Dies hat den Vorteil, dass auf eine solche Weise eine dreidimensionale Umgebung rekonstruiert werden kann, so dass beispielsweise Größen und Dimensionen von Objekten und Flächen bekannt sind.

In einer weiteren Ausgestaltung weist der Bausatz ferner das Merkmal auf, dass das zumindest eine Diagnosemodul zur Aufnahme und vorzugsweise zur Auswertung von Proben am Dekontaminationsobjekt ausgebildet ist. Eine solche Aufnahme von Proben kann beispielsweise über einen abtastenden Sensor bereitgestellt sein, mit welchem beispielsweise eine Oberfläche eines kontaminierten Objektes abgetastet, oder mit welchem ein Teil einer Oberfläche eines kontaminierten Objektes abgeschabt wird, um eine Probensubstanz zu erhalten.

Dies hat den Vorteil, dass das unbemannte Luftfahrzeug nicht nur als mobiles Dekontaminationssystem, sondern ebenso als mobiles Labor, welches zu Auswertungszwecken einsetzbar ist, eingesetzt werden kann. Dies kann vorteilhaft für die Vorbereitung der eigentlichen Dekontamination genutzt werden.

In einer weiteren Ausgestaltung weist der Bausatz ferner das Merkmal auf, dass das zumindest eine unbemannte Luftfahrzeug einen zweiten bildgebenden Sensor aufweist, über den gemeinsam mit dem ersten bildgebenden Sensor ein räumliches Bild erzeugbar ist. Eine solche Erzeugung kann beispielsweise anhand bekannter Triangulationsverfahren erfolgen. Ferner nehmen beide Sensoren denselben Objektpunkt aus zwei verschiedenen Perspektiven auf, wodurch sich die Position des Objektpunktes im Raum eindeutig bestimmen lässt. Durch diese Ausgestaltung ist eine genaue Rekonstruktion der Umgebung möglich, wodurch der Einsatz präzisiert und die Autarkie des unbemannten Luftfahrzeuges erhöht wird. Es versteht sich, dass weitere bildgebende Sensoren verbaut sein können, um das "Blickfeld" zu vergrößern.

In einer weiteren Ausgestaltung weist der Bausatz ferner das Merkmal auf, dass zumindest ein Dekontaminationsmodul Rotationsdüsen zur Erhöhung der Dekontaminationsleistung aufweist. Bei einer solchen Rotationsdüse ist beispielsweise eine Düsenspitze über rein fluidmechanische Ausgestaltung oder über einen Antrieb in Rotation versetzt, was zu einer weiteren Homogenisierung der Verteilung des zerstäubten Dekontaminationsmittels führt.

In einer weiteren Ausgestaltung weist der Bausatz ferner das Merkmal auf, dass zumindest ein Dekontaminationsmodul einen Nebelgenerator, insbesondere einen Feinnebelgenerator, aufweist. Ein solcher Nebelgenerator bzw. Feinnebelgenerator hat den Vorteil, dass ein verwendetes Dekontaminationsmittel im Vergleich zu einem rein durch eine Düse ausgebrachten Dekontaminationsmittel noch feiner (disperser) verteilt wird. Durch die Vernebelung geht das Dekontaminationsmittel gewissermaßen in eine Art Gasphase über, wodurch auch kleinste Poren, Auswölbungen, Spalten, Fugen und/oder Winkel von Objekten durch das Dekontaminationsmittel benetzt und somit dekontaminiert werden können.

In einer weiteren Ausgestaltung weist der Bausatz ferner das Merkmal auf, dass zumindest ein Dekontaminationsmodul zur Erzeugung von thermischer Energie und/oder von energetischer Strahlung zu Dekontaminationszwecken ausgebildet ist. Dies hat den Vorteil, dass gerade bei biologisch bedingten Kontaminationen, beispielsweise durch Pilze, Bakterien und/oder Sporen, eine Dekontamination möglich ist, da diese pathogenen Erreger ab einem gewissen Energieeintrag von thermischer Energie unschädlich gemacht werden können. Ein ähnlicher Effekt kann aufgrund der Oberflächenerwärmung durch das Aufbringen energiereicher Strahlung erzielt werden. Auch chemische Verbindungen zerfallen regelmäßig beim Überschreiten einer gewissen Grenztemperatur.

In einer weiteren Ausgestaltung ist zumindest ein Dekontaminationsmodul des Bausatzes zur luftgestützten Dekontamination als Schaumgenerator ausgestaltet, wobei zumindest ein Druckspeicher und/oder Druckerzeuger zur Bereitstellung eines Druckmittels, insbesondere eines gasförmigen Druckmittels, vorgesehen ist. Ein solches Aufschäumen eines ansonsten flüssigen Dekontaminationsmittels hat den Vorteil, dass auf der kontaminierten Oberfläche ein Schaumteppich gebildet wird, der nur langsam wieder vollständig in die Nassphase zerfällt. Der Schaum und folglich das Dekontaminationsmittel kann in kleinste Poren vordringen, wodurch das Ergebnis der Dekontaminierung verbessert werden kann.

Der Schaum kann auch dazu genutzt werden, um Kontaminanten zu binden. Dies ist insbesondere bei Staub förmigen oder in Staub gebundenen Kontaminanten von Vorteil. Der Schaum kann einerseits die potenziell schädlichen Kontaminanten isolieren und andererseits durch seine Bindungswirkung die Aufnahme der Kontaminanten vereinfachen. Die Anwendung von Schäumen kann mit entsprechenden Saugeinrichtungen kombiniert werden. Auf diese Weise können die Schäume und etwaige in diesem gebundene Kontaminanten aufgenommen werden.

Der Druckluftspeicher und/oder Drucklufterzeuger zur Bereitstellung des Druckmittels hat den Vorteil, dass ein Dekontaminationsmittel in rein flüssiger Form mitgeführt werden kann, wodurch ein geringeres Speichervolumen im Vergleich zu einem schaumförmigen Medium benötigt wird. Ein Aufschäumen erfolgt beispielsweise kurz vor einem Austreten aus einer Spritzdüse durch ein zusätzliches Einspritzen des Druckmittels.

In einer weiteren Ausgestaltung ist der zumindest eine Druckluftspeicher und/oder Drucklufterzeuger bodenseitig angeordnet und über eine Druckleitung mit dem zumindest einen unbemannten Luftfahrzeug gekoppelt. Dies hat den Vorteil, dass kein zusätzliches Gewicht in Form eines Druckluftspeichers und/oder eines Druckerzeugers an dem unbemannten Luftfahrzeug angeordnet und von diesem mitgeführt werden muss. Der Druckspeicher und/oder Erzeuger kann beispielsweise in eine sich autonom bewegende Bodeneinheit integriert sein, die dem unbemannten Luftfahrzeug während des Dekontaminationseinsatzes nachfolgt, beispielsweise auf Basis von (globalen oder lokalen) Positionserkennungsdaten.

In einer weiteren Ausgestaltung ist der zumindest eine Druckluftspeicher und/oder Drucklufterzeuger an dem zumindest einen Luftfahrzeug angeordnet. Diese Ausgestaltung hat den Vorteil, dass gerade bei besonders unwegsamem Gelände, wo kein Einsatz eines Bodenbegleitfahrzeuges möglich ist, die Autarkie der Dekontaminationseinheit bzw. des Bausatzes zur luftgestützten Dekontamination gewährleistet ist.

Gemäß einer weiteren Ausgestaltung ist zumindest ein Betriebsmodus der Steuereinrichtung des Bausatzes zur Eigendekontamination des unbemannten Luftfahrzeugs ausgebildet. Dies hat insbesondere den Vorteil, dass sich das unbemannte Luftfahrzeug zum Abschluss eines Dekontaminationseinsatzes selbständig von Rückständen von Kontaminanten befreien kann und somit idealerweise in einem dekontaminierten Zustand zu einer Ausgangsbasis zurückkehrt. Dadurch muss beispielsweise nach einer Landung des unbemannten Luftfahrzeugs nach einem Dekontaminationseinsatz um den Landeplatz herum keine Hochsicherheits-CBRN-Schutzzone eingerichtet sein.

Es ist beispielsweise auch möglich, dass die Eigendekontamination des unbemannten Luftfahrzeugs lediglich eine Sofortdekontamination und/oder eine Behelfsdekontamination umfasst, durch die für eine begrenzte Zeit weiterhin eine eingeschränkte Nutzung des unbemannten Luftfahrzeuges möglich ist. Eine weiterführende Dekontamination, nach der eine Aufhebung des CBRN-Schutzes möglich ist und/oder eine zertifizierte Dekontamination, nach der eine autorisierte Freigabe für die uneingeschränkte Weiterbenutzung ohne jeglichen CBRN-Schutz erfolgt, kann beispielsweise nach dem Abschluss des aktuellen Dekontaminationseinsatzes erfolgen.

In einer weiteren Ausgestaltung umfasst die Steuereinrichtung des Bausatzes zur luftgestützten Dekontamination zur Durchführung einer Eigendekontaminationsprozedur ausgebildet ist, durch die das unbemannte Luftfahrzeug veranlasst wird, Flugmanöver zur Eigenkontamination auszuführen.

Solche Flugmanöver können beispielsweise Rotationsbewegungen um eine Längs- und/oder Querachse des unbemannten Luftfahrzeuges und/oder parabelartige Flugmanöver umfassen. Gängige aus der Luftfahrt bekannte Flugmanöver sind hierbei ein Rollen bzw. Wanken des unbemannten Luftfahrzeugs um seine Längsachse, ein Nicken bzw. Stampfen des unbemannten Luftfahrzeugs um seine Querachse sowie ein Gieren bzw. Schlingern um seine Vertikalachse.

Während der einzelnen Flugmanöver kann beispielsweise ein Dekontaminationsmittel versprüht werden, vorzugsweise entgegen einer Fallrichtung, und nachfolgend auf das unbemannte Luftfahrzeug "herabregnen". Die Flugmanöver können beispielsweise durch die Steuereinrichtung gesteuert werden. Die Flugmanöver können eine gezielte Manipulation der Rotorblattanstellwinkel umfassen. Bei einem unbemannten Luftfahrzeug mit mehreren Antriebsrotoren (Quadrocopter) kann dies über gezielte Ansteuerung einzelner Rotoren und deren Motoren erfolgen. Ferner können diese Flugmanöver auch durch eine Manipulation der Quer-, Seiten- und/oder Höhenruder an den Tragflügeln bzw. dem Heckflügel gesteuert werden.

Gemäß einer weiteren Ausgestaltung umfasst der Bausatz zur luftgestützten Dekontamination zumindest zwei unbemannte Luftfahrzeuge, die dazu ausgebildet sind, sich in einem Eigendekontaminationsmodus gegenseitig zu dekontaminieren. Diese Ausgestaltung hat den Vorteil, dass die einzelnen unbemannten Luftfahrzeuge eine Eigenkontamination nicht über aufwändig zu steuernde Eigenflugmanöver durchführen müssen, sondern dass eine solche Eigendekontamination beispielsweise über einen vordefinierten Parallelflug in vertikaler Richtung übereinander durchführbar ist. Beispielhaft kann die jeweilige Position der zumindest zwei unbemannten Luftfahrzeuge während des Eigendekontaminationsvorgangs getauscht werden, ggfs. mehrfach.

Es versteht sich, dass die gegenseitige Eigendekontamination nicht unbedingt gleichzeitig erfolgen muss. Gleichwohl ist es vorstellbar, dass sich die zumindest zwei unbemannten Luftfahrzeuge gegenseitig, aber ggfs. auch nacheinander dekontaminieren können.

Gemäß einer weiteren Ausgestaltung weist der Bausatz zur luftgestützten Dekontamination ferner eine Bedieneinrichtung auf, die dazu eingerichtet ist, kabelgebunden und/oder kabellos mit dem unbemannten Luftfahrzeug zu kommunizieren. Eine solche Bedieneinrichtung kann beispielsweise durch eine Fernsteuerung und/oder ein Bedienpult, beispielsweise innerhalb einer Leitwarte, realisiert sein. In anderen Ausgestaltungen sind beispielsweise auch virtuelle Bediensysteme, vorzugsweise unter Nutzung von Einrichtungen zur Erzeugung einer virtuellen Realität (VR), beispielsweise einer VR-Brille, vorstellbar. Kombinationen einer VR-Bedieneinheit mit einer haptischen Bedieneinheit sind ebenso vorstellbar.

Gemäß einer weiteren Ausgestaltung ist das zumindest eine unbemannte Luftfahrzeug des Bausatzes über eine Datenverbindung steuerbar, wobei die Datenverbindung einen Flugsteuerungskanal zur Flugsteuerung und einen Dekontaminationskanal zur Steuerung des zumindest einen Dekontaminationsmoduls aufweist. Eine solche Datenverbindung kann vorzugsweise über drahtlose Netzwerke, grundsätzlich jedoch auch über Kabelverbindungen, hergestellt sein. Die Datenverbindung ist vorzugsweise zu einem gegenseitigen Datenaustausch bzw. Datentransfer zwischen der Steuereinrichtung des unbemannten Luftfahrzeugs und einer vorzugsweise bodenseitig angeordneten Steuer- und Kontrolleinheit befähigt. Ein Vorteil einer drahtlosen Datenverbindung ist, dass die Autarkie des unbemannten Luftfahrzeugs gerade in unwegsamem Gelände gesteigert werden kann.

Gemäß einer weiteren Ausgestaltung weist das unbemannte Luftfahrzeug des Bausatzes zur luftgestützten Dekontamination ferner steuerbare Leitelemente zur Strömungsführung auf. Solche Leitelemente können beispielsweise über eine oder mehrere Leitschaufeln realisiert sein. Die zumindest eine Leitschaufel ist vorzugsweise individuell über die Steuereinrichtung ansteuerbar und verfügt zumindest über einen, vorzugsweise zwei, besonders bevorzugt drei Freiheitsgrade, die beispielsweise über drehbare Gelenkverbindungen realisierbar sind. Die Leitelemente haben den Vorteil, dass die Eigenluftströmung, welche zum Boden hin gerichtet ist und in Antwort auf eine Auftriebskraft des unbemannten Luftfahrzeugs entsteht, durch die Leitelemente gezielt auf ein zu dekontaminierendes Objekt gelenkt werden kann.

Es ist jedoch auch vorstellbar, zumindest eine Rotorgondel selbst verstellbare/verschwenkbar zu gestalten, insbesondere bei einem Luftfahrzeug mit mehreren Rotoren. Damit fungiert die verstellbare Rotorgondel als Leitelement.

Gemäß einer weiteren Ausgestaltung ist zumindest ein Dekontaminationsmodul zur Erzeugung eines Unterdrucks zur Aufnahme loser Kontaminanten ausgebildet. Bei den losen Kontaminanten kann es sich beispielsweise (je nach erzeugtem Unterdruck) um Kleinst- und Kleinpartikel handeln. Die Partikel werden beispielsweise bei einem Flug in Bodennähe durch den erzeugten Unterdruck des Dekontaminationsmoduls in Richtung des unbemannten Luftfahrzeugs angesaugt. Die Partikel sind beispielhaft in einem vorhandenen Aufnahmebehälter sammelbar. Ein solcher Sammelbehälter kann beispielsweise an einer Basisstation abgeladen und dort weiterbehandelt werden.

Eine Saugeinrichtung zur Aufnahme loser Kontaminanten oder zur Aufnahme von Kontaminanten, die in einem Schaum gebunden sind, erleichtert die Dekontaminationsprozedur. Beispielhaft ist die Saugeinrichtung mit einer Filtereinheit kombiniert, um potenziell schädliche Kontaminanten sicher aufnehmen zu können.

Gemäß einer weiteren Ausgestaltung umfasst der Bausatz zur luftgestützten Dekontamination zwei oder mehr unbemannte Luftfahrzeuge, die zur Kommunikation miteinander ausgebildet sind, wobei die zwei oder mehr unbemannten Luftfahrzeuge zur Erhöhung der Dekontaminationsleistung miteinander funktional koppelbar sind. Eine solche Kommunikation unter den zwei oder mehr unbemannten Luftfahrzeugen kann beispielsweise über Maschinen-zu-Maschinen-Kommunikation erfolgen.

Beispielhaft sind Kommunikations-Protokolle denkbar, durch die jeweils ein unbemanntes Luftfahrzeug die Einsatzführung erhält, wobei die restlichen unbemannten Luftfahrzeuge vorzugsweise über eine künstliche Schwarmintelligenz (beispielsweise auf Basis einer Master-Slave-Steuerung) dem Führungs-Luftfahrzeug während des Einsatzes folgen. Hierbei kann beispielsweise die Führungsposition je nach Einsatzstadium einem anderen unbemannten Luftfahrzeug übertragen werden, das für das speziell vorhandene Stadium des Einsatzes ausgebildet ist.

Sofern eine zumindest teilweise manuelle Bedienung angedacht ist, ist es vorstellbar, dass ein Bediener primär ein einziges Luftfahrzeug steuert, und dass weitere Luftfahrzeuge dem führenden Luftfahrzeug automatisiert oder teilautomatisiert folgen.

Die zwei oder mehr unbemannten Luftfahrzeuge können vorzugsweise in Form eines Schwarms über ein zu dekontaminierendes Gebiet fliegen und durch die Kommunikation untereinander zu einer wesentlich effizienteren Durchführung des Einsatzes (Erhöhung der dekontaminierbaren Fläche pro Zeit) beitragen. Die zwei oder mehr unbemannten Luftfahrzeuge können in anderen Ausführungen auch jeweils individuell steuerbar sein.

Gemäß einer weiteren beispielhaften Ausgestaltung ist die Steuereinrichtung dazu ausgebildet, die zwei oder mehr unbemannten Luftfahrzeuge gemeinsam zu positionieren und zu betreiben, um einen Sprühvorhang zu bilden. Auf diese Weise kann ein konventioneller Sprühvorhang "simuliert" werden. Beispielhaft können die zwei oder mehr unbemannten Luftfahrzeuge in der Luft derart beabstandet zueinander angeordnet sein, dass sich ein Sprühportal nachbilden lässt, welches aus einer Mehrzahl von Düsen ein Fluid abgibt, um den Sprühvorhang zu bilden. Eine Kette von Luftfahrzeugen kann den Sprühvorhang bilden. Wenn ohnehin ein Schwarm an Luftfahrzeugen vorgesehen ist, lässt sich somit ohne großen Mehraufwand bzw. ohne den sonst üblichen Installationsaufwand ein Sprühvorhang bereitstellen.

Beispielhaft können die zwei oder mehr unbemannten Luftfahrzeuge im Wesentlichen unbeweglich in ihrer Position verweilen, um einen feststehenden Sprühvorhang zu bilden. Zu dekontaminierende Objekte können durch den Sprühvorhang hindurch geführt und auf diese Weise dekontaminiert werden. Gemäß einer weiteren Ausführungsform kann die Steuereinrichtung die zwei oder mehr unbemannten Luftfahrzeuge derart betreiben, dass sich ein beweglicher Sprühvorhang ergibt. Demgemäß können auch unbewegliche Objekte mit dem Sprühvorhang dekontaminiert werden.

Es versteht sich, dass das offenbarungsgemäße Verfahren und die offenbarungsgemäße Verwendung analog zu dem offenbarungsgemäßen Bausatz weitergebildet sein können.

Es versteht sich, dass die vorstehend und nachfolgend beschriebenen Ausgestaltungen des offenbarungsgemäßen Bausatzes zur luftgestützten Dekontamination, inklusive der abhängigen Ansprüche, in einer äquivalenten Form für das offenbarungsgemäße Verfahren zur Dekontamination gelten und entsprechend anwendbar sind.

Es versteht sich, dass die vorstehend genannten und die nachstehend noch zu erläuternden Merkmale der vorliegenden Offenbarung nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile der Offenbarung ergeben sich aus der nachfolgenden Beschreibung mehrerer bevorzugter Ausführungsbeispiele unter Bezugnahme auf die Zeichnungen. Es zeigen:
- Fig. 1: ein Ausführungsbeispiel eines Bausatzes zur luftgestützten Dekontamination;
- Fig. 2: ein weiteres Ausführungsbeispiel eines Bausatzes zur luftgestützten Dekontamination;
- Fig. 3: noch ein weiteres Ausführungsbeispiel eines Bausatzes zur luftgestützten Dekontamination mit einer beispielhaften bodenseitigen Basisstation;
- Fig. 4: ein weiteres Ausführungsbeispiel eines Bausatzes zur luftgestützten Dekontamination;
- Fig. 5: ein weiteres Ausführungsbeispiel eines Bausatzes zur luftgestützten Dekontamination;
- Fig. 6: ein weiteres Ausführungsbeispiel eines Bausatzes zur luftgestützten Dekontamination mit zwei unbemannten Luftfahrzeugen;
- Fig. 7: ein Ausführungsbeispiel eines unbemannten Luftfahrzeugs, insbesondere einer rotorbetriebenen Drohne;
- Fig. 8: eine vereinfachte Darstellung zur Veranschaulichung einer Verwendung einer Mehrzahl von unbemannten Luftfahrzeugen zur Erzeugung eines Sprühvorhangs;
- Fig. 9: ein Flussdiagramm zur Veranschaulichung eines Ausführungsbeispiels eines Verfahrens zur Dekontamination; und
- Fig. 10: ein Flussdiagramm zur Veranschaulichung eines Ausführungsbeispiels einer Dekontaminationsprozedur.

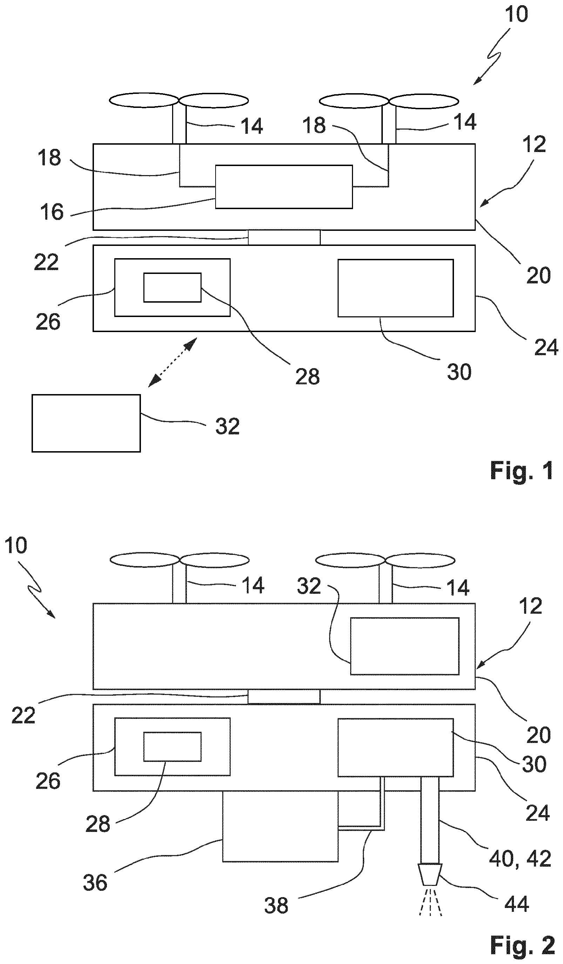

Fig. 1 zeigt eine beispielhafte Ausführungsform eines Bausatzes 10 zur luftgestützten Dekontamination mit zumindest einem unbemannten Luftfahrzeug 12. Das unbemannte Luftfahrzeug 12 kann insbesondere eine rotorbetriebene Drohne sein. In anderen Ausführungsbeispielen kann das unbemannte Luftfahrzeug 12 beispielsweise auch eine Drohne mit einem oder mehreren Strahltriebwerken sein. Das unbemannte Luftfahrzeug 12 kann auch anderweitig gestaltet und angetrieben sein. Das unbemannte Luftfahrzeug 12 weist eine Antriebseinheit 14 auf. Im vorliegenden Fall weist die Antriebseinheit 14 einen Motor, eine Rotornabe sowie einen zweiblättrigen Rotor auf. Der Motor der Antriebseinheit 14 kann beispielsweise elektrisch und/oder pneumatisch betrieben sein, oder als Verbrennungsmotor ausgeführt sein. Der Rotor kann zwei oder mehrere Rotorblätter aufweisen. Im vorliegenden Fall weist das unbemannte Luftfahrzeug 12 vier Antriebseinheiten 14 auf, von welchen in der Seitenansicht in Fig. 1 lediglich zwei Antriebseinheiten 14 sichtbar sind. Solche rotorbetriebene Drohnen mit vier Antriebseinheiten 14 werden häufig auch als Quadrocopter bezeichnet.

Der Bausatz 10 weist zudem eine Energieversorgung 16 auf, die beispielsweise in Form einer Hochleistungsbatterie (z.B. Li-Polymer, Li-lonen oder Li-C) ausgeführt sein kann. In Fig. 1 ist die Energieversorgung 16 in dem Luftfahrzeug 12 integriert und speist die Antriebseinheiten 14 jeweilige Energieversorgungsverbindungen 18 mit Energie. In anderen Ausführungsbeispielen kann die Energieversorgung 16 auch außerhalb des unbemannten Luftfahrzeugs 12 angeordnet sein. Ebenfalls kann die Energieversorgung 16 in Form eines oder mehrerer Kraftstofftanks ausgeführt sein, die mit einen oder mehreren Antriebseinheiten 14 gekoppelt sind, wobei die Antriebseinheiten 14 in einem solchen Fall beispielsweise Verbrennungsmotoren sein können.

Das unbemannte Luftfahrzeug 12 weist vorzugsweise eine stabile Außenstruktur auf, die beispielsweise in Form eines Rahmens 20 ausgeführt ist. Der Rahmen 20 kann über eine Mehrzahl von Quer- und Längsverstrebungen verfügen, durch welche die statische und dynamische Stabilität gewährleistet ist. Zudem ist der Rahmen 20 vorzugsweise derart ausgestaltet, dass die Antriebseinheit 14 (im hier vorliegenden Fall vier Antriebseinheiten 14) sowie die Energieversorgung 16 an dem oder in dem Rahmen anordenbar sind.

In einer beispielhaften Ausführungsform weist der Bausatz 10 eine Schnittstelle 22 zur Ankopplung zumindest eines Dekontaminationsmoduls 24 auf. Im hier vorliegenden Fall ist die Schnittstelle 22 derart mit dem Rahmen 20 verbunden, dass eine Aufnahmeplattform zur Aufnahme des Dekontaminationsmoduls 24 ausgebildet ist. In anderen Ausführungsbeispielen kann der Bausatz 10 auch über eine Mehrzahl von Schnittstellen 22 verfügen. Zudem sind Ausführungsbeispiele denkbar, bei denen eine Mehrzahl von Dekontaminationsmodulen 24 über eine Mehrzahl von Schnittstellen 22 mit einem einzigen unbemannten Luftfahrzeug 12 verbunden sind. Vorzugsweise ist die Schnittstelle 22 standardisiert ausgeführt, so dass eine Mehrzahl von Dekontaminationsmodulen 24 über denselben Schnittstellentyp an den Bausatz 10 bzw. an dem unbemannten Luftfahrzeug 12 ankoppelbar ist.

Vorzugsweise verfügt der Bausatz 10 über einen Satz von Dekontaminationsmodulen 24 zur Ankopplung an die Schnittstelle 22. Der Satz von Dekontaminationsmodulen 24 umfasst zumindest ein Diagnosemodul 26. Das Diagnosemodul 26 ist zur Erfassung eines Dekontaminationszustandes eingerichtet und weist zumindest einen Sensor 28 auf, der zur Erfassung des Dekontaminationszustandes eingerichtet ist. Ein solcher Sensor 28 kann beispielsweise ein optischer Sensor, ein Infrarotsensor oder ein chemisch und/oder biologisch aktivierbarer Sensor sein.

Ferner weist der Satz von Dekontaminationsmodulen 24 zumindest ein Behandlungsmodul 30 auf. Das zumindest eine Behandlungsmodul 30 ist beispielhaft zur Erzeugung und/oder Nutzung einer Fluidströmung zu Dekontaminationszwecken ausgebildet. Eine solche Fluidströmung kann beispielsweise eine Strömung eines Dekontaminationsmittels oder eines Gemisches aus zwei oder mehreren Dekontaminationsmitteln sein. Zur Erzeugung der Fluidströmung kann das Behandlungsmodul 30 beispielsweise eine oder mehrere Pumpen aufweisen, die vorzugsweise eine hohe chemische Resistenz aufweist. Allgemein ist es bevorzugt, dass die Komponenten des Bausatzes 10 eine hohe chemische Resistenz aufweisen und sich besonders bevorzugt chemisch inert verhalten, um somit der starken Beanspruchung durch teilweise ätzende Chemikalien und Lösungsmittel standzuhalten.

Das Behandlungsmodul 30 und/oder das Diagnosemodul 26 können beispielsweise in einem einzelnen Dekontaminationsmodul 24 integriert sein. In anderen Ausführungsbeispielen kann das Diagnosemodul 26 sowie das Behandlungsmodul 30 auch als jeweils separates Dekontaminationsmodul 24 ausgebildet sein. Im Ausführungsbeispiel gemäß Fig. 1 ist das Diagnosemodul 26 gemeinsam mit dem Sensor 28 sowie das Behandlungsmodul 30 in einem einzigen Dekontaminationsmodul 24 integriert.

Der Bausatz 10 zur luftgestützten Dekontamination weist ferner eine Steuereinrichtung 32 zur Steuerung des unbemannten Luftfahrzeuges 12 und/oder des Satzes an Dekontaminationsmodulen 24 auf. In Fig. 1 ist die Steuereinrichtung 32 separat von dem unbemannten Luftfahrzeug 12 angeordnet und steht über eine kabellose oder kabelgebundene Steuerverbindung 34 in kommunikativem Kontakt mit dem unbemannten Luftfahrzeug 12 bzw. dem Dekontaminationsmodul 24. In anderen Ausführungsbeispielen kann die Steuereinrichtung 32 auch in dem oder an dem unbemannten Luftfahrzeug 12 angeordnet sein.

Das in Fig. 2 gezeigte zweite Ausführungsbeispiel des Bausatzes 10 zur luftgestützten Dekontamination weist alternativ oder zusätzlich zu den in Fig. 1 gezeigten Komponenten einen Vorratsbehälter 36 zur Aufnahme eines Dekontaminationsmittels auf, der im hier vorliegenden Fall an der Unterseite des Dekontaminationsmoduls 24 angeordnet ist. In anderen Ausführungsbeispielen kann der Vorratsbehälter auch an dem unbemannten Luftfahrzeug 12 angeordnet und/oder mit diesem gekoppelt sein. Der Vorratsbehälter 36 ist beispielsweise mit dem Behandlungsmodul 30 über eine oder mehrere Dekontaminationsmittel-Versorgungsleitung 38 gekoppelt.

Das Behandlungsmodul 30 gemäß Fig. 2 weist ferner eine Düsenanordnung 40 mit zumindest einer Düse 42 auf. Durch die zumindest eine Düse 42 kann ein Dekontaminationsmittel vorzugsweise gezielt in eine Eigenluftströmung des unbemannten Luftfahrzeugs 12 eingebracht werden. Die zumindest eine Düse 42 ist vorzugsweise dazu eingerichtet, ein punktförmiges, linienförmiges oder flächenförmiges Strahlbild zu erzeugen. In anderen Ausführungsbeispielen kann das Dekontaminationsmodul 24 bzw. das Behandlungsmodul 30 ebenfalls eine Mehrzahl von Düsenanordnungen 40, jeweils mit einer Mehrzahl von Düsen 42 aufweisen. Die zumindest eine Düse 42 weist vorzugsweise eine Rotationsdüse 44 auf, durch die die Dekontaminationsleistung erhöht werden kann.

Die Steuereinrichtung 32 ist in Fig. 2 in das unbemannte Luftfahrzeug 12 integriert, zumindest teilweise. Hierbei ist die Steuereinrichtung 32 beispielsweise als Mikrokontroller oder in Form einer Steuerhauptplatine realisiert.

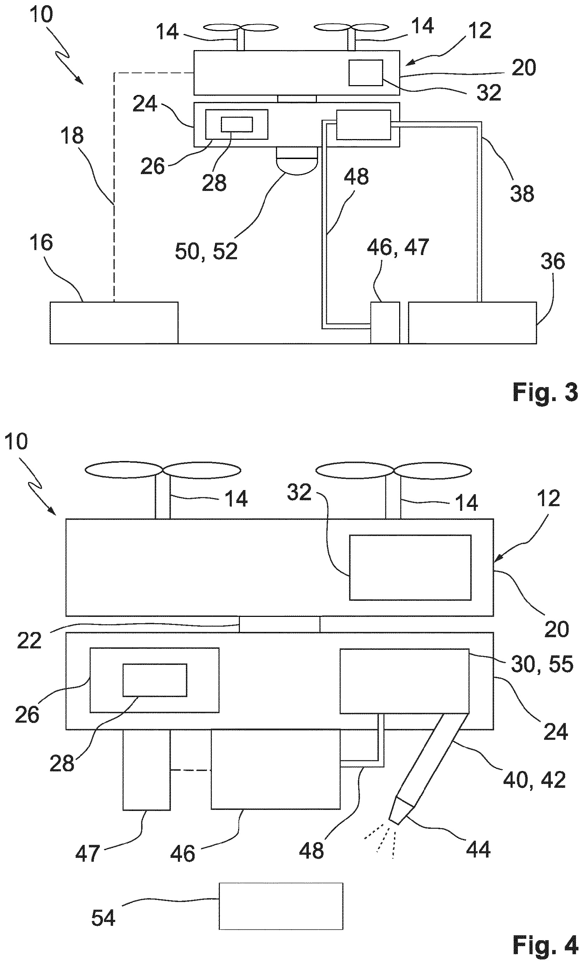

Fig. 3 zeigt ein weiteres Ausführungsbeispiel des Bausatzes 10, bei dem sowohl die Energieversorgung 16 als auch der Vorratsbehälter 36 als terrestrische, bodenseitige Systeme ausgestaltet sind. Somit sind während eines Dekontaminationseinsatzes des unbemannten Luftfahrzeugs 12 sowohl die Energieversorgung 16 als auch der Vorratsbehälter 36, in dem ein Dekontaminationsmittel oder ein Dekontaminationsmittelgemisch enthalten ist, auf dem Boden angeordnet. Eine solche Anordnung kann entweder stationär erfolgen oder über ein, beispielsweise autonom fahrendes, Fahrzeug gebildet sein. Beispielsweise kann ein autonom fahrendes Transportfahrzeug in Form eines Tankwagens das unbemannte Luftfahrzeug 12 während eines Dekontaminationseinsatzes begleiten. Beispielsweise steht ein solches autonom fahrendes Transportfahrzeug in ständiger, kommunikativer Verbindung mit dem unbemannten Luftfahrzeug 12 und folgt diesem beispielsweise aufgrund von globalen (z.B. GPS-Daten) oder lokalen Positionsinformationen.

Die terrestrische Energieversorgung 16 kann beispielsweise eine leistungsstarke Groß-Batterie, ein Stromerzeuger, in anderen Ausführungsbeispielen ein Kraftstofftank sein, der über die Energieversorgungsverbindung 18 mit dem unbenannten Luftfahrzeug 12 gekoppelt ist.

Der terrestrische Vorratsbehälter 36 ist über die Dekontaminationsmittel-Versorgungsleitung 38 mit dem Dekontaminationsmodul 24 bzw. dem Behandlungsmodul 30 verbunden. Die Länge der Dekontaminationsmittel-Versorgungsleitung 38 sowie der Energieversorgungsverbindung 18 kann je nach Einsatzradius von einigen Metern bis zu einigen hundert Metern variieren. Die Versorgungsleitungen 18, 38 können beispielsweise (hier nicht dargestellt) über sogenannte Hilfsdrohnen geführt sein, so dass das unbemannte Luftfahrzeug 12 während eines Dekontaminationseinsatzes den durch das Eigengewicht der Leitungen 18, 38 bedingten Zugbelastungen nicht oder nur teilweise ausgesetzt ist.

In Fig. 3 sind zusätzlich ein optional vorhandener, jedoch nicht zwingend notwendiger Druckspeicher 46 sowie ein Druckerzeuger 47 bodenseitig angeordnet und über eine Druckleitung 48 mit dem zumindest einen unbemannten Luftfahrzeug 12 bzw. dem Behandlungsmodul 30 verbunden. Der Druckspeicher 46 und/oder der Druckerzeuger 47 können in anderen Ausführungsbeispielen ebenfalls in einem, beispielsweise autonom fahrenden, Transportfahrzeug mitgeführt sein.

Zumindest ein Dekontaminationsmodul 24 ist in Fig. 3 als Überwachungsmodul 50 zur Überwachung des Dekontaminationsablaufs ausgebildet. Zudem weist das unbemannte Luftfahrzeug 12 zumindest einen ersten bildgebenden Sensor 52 auf. Im hier vorliegenden Fall bilden das Überwachungsmodul 50 und der zumindest erste bildgebende Sensor 52 das gleiche Dekontaminationsmodul 24. In anderen Ausführungsbeispielen können beide auch als zwei separate Dekontaminationsmodule 24 vorliegen. Die Steuereinrichtung 32 ermöglicht eine Steuerung des unbemannten Luftfahrzeugs 12 für einen Bediener ohne eine direkte Sicht unter Einbeziehung der durch den ersten bildgebenden Sensor 52 übermittelten Bilddaten.

Fig. 4 zeigt ein weiteres Ausführungsbeispiel. In Fig. 4 ist der Druckspeicher 46 von dem Druckerzeuger 47 getrennt angeordnet. Der Druckspeicher 46 ist zusammen mit dem Druckerzeuger 47 an dem zumindest einen Luftfahrzeug 12 angeordnet. Im hier vorliegenden Fall sind der Druckspeicher 46 und der Druckerzeuger 47 unterhalb des Dekontaminationsmoduls 24 angeordnet. In anderen Ausführungsbeispielen können der Druckspeicher 46 und/oder der Druckerzeuger 47 auch direkt in das unbemannte Luftfahrzeug 12 integriert sein. Der Druckerzeuger 47 ist mit dem Druckspeicher 46 gekoppelt. Von dem Druckluftspeicher 47 führt eine Druckleitung 48 zu einem Schaumgenerator 55, der im hier vorliegenden Fall in das Behandlungsmodul 30 integriert ist. Der Schaumgenerator ist dazu eingerichtet, ein Dekontaminationsmittel von einem Austritt aus der Düse 42 aufzuschäumen.

Die Düsenanordnung 40 bzw. die Düse 42 zielt in Fig. 4 mit der Rotationsdüse 44 auf ein Dekontaminationsobjekt 54. Das Dekontaminationsobjekt 54 kann in anderen Ausführungsbeispielen beispielsweise eine kontaminierte Person, ein kontaminierter Gegenstand oder eine Teilfläche einer kontaminierten Oberfläche sein. Das Zielen der Düsenanordnung 40 bzw. der Düse 42 kann beispielsweise über eines oder mehrere Gelenke (hier nicht dargestellt) realisiert sein, die beispielsweise über die Steuereinrichtung 32 einzeln ansteuerbar sind und somit eine Beweglichkeit der Düsenanordnung 40 (relativ zum Luftfahrzeug 12) in zumindest zwei oder drei Freiheitsgraden gewährleistet.

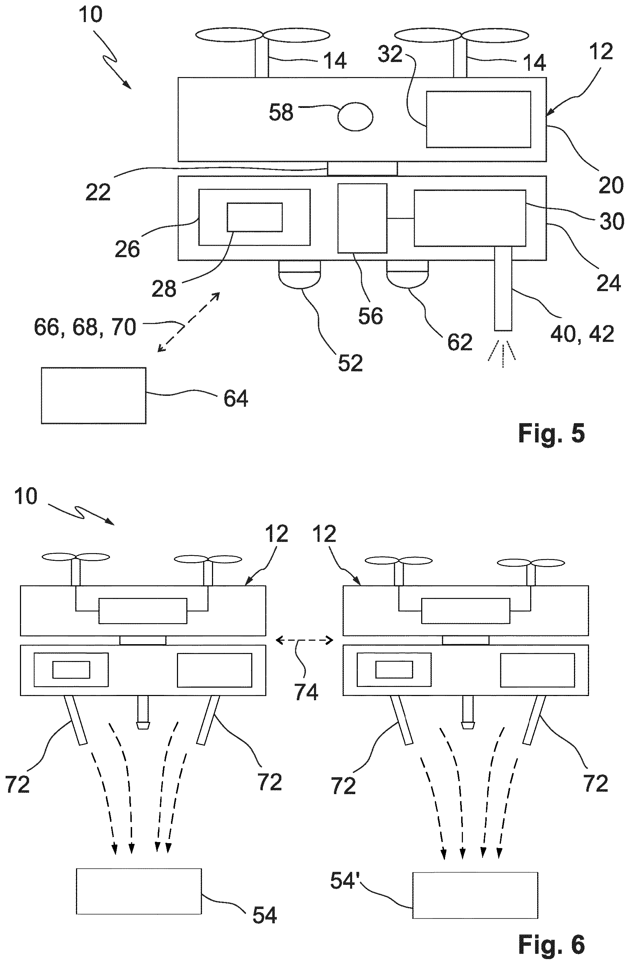

Fig. 5 zeigt ein weiteres Ausführungsbeispiel eines Bausatzes 10 zur luftgestützten Dekontamination. In diesem Ausführungsbeispiel weist zumindest ein Dekontaminationsmodul 24 einen Nebelgenerator 56 auf. Der Nebelgenerator 56 ist beispielsweise als Feinnebelgenerator gestaltet. Der Nebelgenerator 56 ist dazu eingerichtet, ein Dekontaminationsmittel in einen gasphasenähnlichen Zustand zu überführen oder das Dekontaminationsmittel mit einem Trägergas zu mischen. Der Nebel wird beispielsweise über die Düsenanordnung 40 bzw. die Düse 42 ausgeleitet und gelangt von dort aus schwerkraftbedingt auf ein zu dekontaminierendes Objekt, auf dem er sich niederschlägt.

Das zumindest eine unbemannte Luftfahrzeug 12 ist in Fig. 5 beispielhaft mit zumindest einem Abstandssensor 58 versehen. Der Abstandssensor 58 ist beispielsweise dazu eingerichtet, eine Umgebung des unbemannten Luftfahrzeugs 12 zu überwachen. Eine solche Überwachung kann beispielsweise dem Kollisionsschutz dienen.

Der Bausatz 10 in Fig. 5 weist zudem einen ersten bildgebenden Sensor 52 auf. Der erste bildgebende Sensor 52 ist beispielsweise dazu eingerichtet, Bilddaten bzw. Bildinformationen zu erzeugen, die von der Steuereinrichtung 32 beispielsweise dazu verwendet werden, einen Kontaminierungsgrad der Umgebung zu bestimmen. Zusätzlich zu dem ersten bildgebenden Sensor 52 weist das unbemannte Luftfahrzeug 12 einen zweiten bildgebenden Sensor 62 auf, durch den gemeinsam mit dem ersten bildgebenden Sensor 52 ein räumliches Bild, beispielsweise über das Triangulationsprinzip, erzeugbar ist. Zudem ist die Steuereinrichtung 32 beispielsweise dazu eingerichtet, auf Basis von Bildinformationen, die durch den zumindest ersten bildgebenden Sensor 52 erzeugt werden, Strukturen zu erkennen, beispielsweise Kanten, Ecken, Flächen oder dgl. Beispielsweise ist die Steuereinrichtung 32 dazu eingerichtet, die Bildinformationen des ersten und/oder zweiten bildgebenden Sensors 52, 62 sowie die Abstandsinformationen des Abstandssensors 58 miteinander zu verknüpfen.

Zudem weist der Bausatz 10 ferner eine Bedieneinrichtung 64 auf, die dazu eingerichtet ist, kabelgebunden und/oder kabellos mit dem unbemannten Luftfahrzeug 12 zu kommunizieren. Im hier vorliegenden Fall kommuniziert die Bedieneinrichtung 64 kabellos mit dem unbemannten Luftfahrzeug 12. Das unbemannte Luftfahrzeug 12 ist beispielsweise über eine zwischen der Bedieneinrichtung 64 und dem unbemannten Luftfahrzeug 12 bestehenden Datenverbindung 66 steuerbar. Die Datenverbindung 66 weist einen Flugsteuerkanal zur Flugsteuerung und einen Dekontaminationskanal zur Steuerung des zumindest eines Dekontaminationsmoduls 24 auf. In anderen Ausführungsbeispielen kann die Datenverbindung 66 auch mehr als die zuvor erwähnten Kanäle aufweisen.

Fig. 6 zeigt eine weitere beispielhafte Ausführungsform eines Bausatzes 10 zur luftgestützten Dekontamination. In diesem Ausführungsbeispiel umfasst der Bausatz 10 zumindest zwei unbemannte Luftfahrzeuge 12, die dazu ausgebildet sind, sich in einem Eigendekontaminationsmodus, der beispielsweise über die Steuereinrichtung 32 einstellbar ist, gegenseitig (gleichzeitig oder nacheinander) zu dekontaminieren. In weiteren Ausführungsbeispielen kann die Steuereinrichtung 32 eine Eigendekontaminationsprozedur umfassen, durch die das unbemannte Luftfahrzeug 12 veranlasst wird, Flugmanöver zur Eigendekontamination auszuführen. Somit ist sowohl die Eigendekontamination von lediglich einem unbemannten Luftfahrzeug 12 (durch dieses Luftfahrzeug selbst) genauso möglich, als auch die (gegenseitige) Eigendekontamination in Form eines vordefinierten Eigendekontaminationsmodus, wenn zwei oder mehr unbemannte Luftfahrzeuge 12 für den luftgestützten Dekontaminationseinsatz eingesetzt werden.

Die beiden in Fig. 6 gezeigten, unbemannten Luftfahrzeuge 12 weisen beispielhaft die gleiche Bauform sowie gleiche Dekontaminationsmodule 24 auf. Es versteht sich, dass die Luftfahrzeuge 12 auch anderweitig gestaltet sein können. Der Aufbau folgt im Wesentlichen dem in Fig. 1 beschriebenen Aufbau, wobei hier aus Veranschaulichungsgründen keine Steuereinrichtung 32 dargestellt wurde. Die zumindest zwei unbemannten Luftfahrzeuge 12 stehen beispielsweise miteinander in einer Wirkverbindung. Zusätzlich zu dem in Fig. 1 erläuterten Ausführungsbeispiel des Bausatzes 10 weist der Bausatz 10 in Fig. 6 an dem jeweiligen unbemannten Luftfahrzeug 12 ferner steuerbare Leitelemente 72 zur Strömungsführung einer Eigenluftströmung des unbemannten Luftfahrzeuges 12 auf.

Die Leitelemente 72 können beispielsweise in Form von Leitschaufeln ausgeführt sein, die beispielsweise jeweils einzeln über eines oder mehrere Gelenke verfügen, die beispielsweise über die Steuereinrichtung 32 jeweils einzeln ansteuerbar sind. Im hier gezeigten Ausführungsbeispiel verfügt jedes der beiden unbemannten Luftfahrzeuge 12 über jeweils zwei Leitelemente 72. In anderen Ausführungsbeispielen kann auch eine Mehrzahl von Leitelementen 72 vorgesehen sein. Die Leitelemente 72 leiten die Eigenluftströmung der jeweiligen unbemannten Luftfahrzeuge 12 gezielt auf das zu dekontaminierende Objekt 54, 54'. Durch eine solche gezielte Strömungsführung kann das Dekontaminationsergebnis verbessert werden.

Ein ähnlicher Effekt der gezielten Strömungsführung kann erzielt werden, indem die Antriebseinheit 14 des zumindest einen unbemannten Luftfahrzeugs 12 derart angesteuert wird, dass eine gezielte Richtung der Strömungsführung des Luftfahrzeugs 12 auf ein Dekontaminationsobjekt 54, 54' ermöglicht ist.

Die zwei oder mehr unbemannten Luftfahrzeuge 12 sind beispielsweise zur Kommunikation untereinander ausgebildet, wobei die zwei oder mehr unbemannten Luftfahrzeuge 12 zur Erhöhung der Dekontaminationsleistung miteinander funktional koppelbar sind. Eine solche funktionale Kopplung 74 ist in Fig. 6 zur Veranschaulichung durch einen Doppelpfeil zwischen den beiden unbemannten Luftfahrzeugen 12 angedeutet.

In weiteren hier nicht explizit dargestellten Ausführungsbeispielen kann zumindest ein Dekontaminationsmodul 24 zur Erzeugung von thermischer Energie und/oder von energetischer Strahlung zu Dekontaminationszwecken ausgebildet sein. Dies kann beispielsweise Heißlufterzeugung oder durch Infrarotstrahlung realisiert sein. Ferner ist es vorstellbar, zumindest ein Dekontaminationsmodul 24 zur Erzeugung eines Unterdrucks zur Aufnahme von Kontaminanten (beispielsweise der Dekontaminationsobjekte 54, 54') auszubilden.

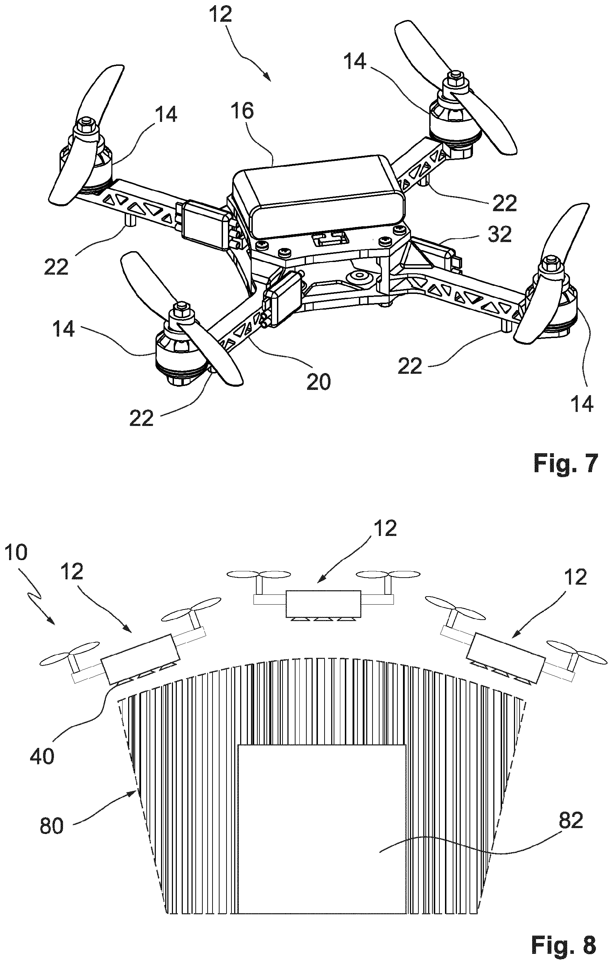

Fig. 7 zeigt ergänzend ein Ausführungsbeispiel eines beispielhaft als rotorbetriebene Drohne gestalteten unbemannten Luftfahrzeugs 12. Die rotorbetriebene Drohne (auch als Quadrocopter bezeichnet) gemäß Fig. 7 weist beispielshaft vier Rotoren auf, die jeweils an einem Ende eines hier kreuzförmig gestalteten Rahmens 20 angeordnet sind und jeweils über Antriebseinheiten 14 verfügen, die im hier vorliegenden Fall als Elektromotoren ausgebildet sind. Es sind auch Gestaltungen mit sechs, acht oder gar mehr Rotoren vorstellbar, wobei dann der Rahmen 20 entsprechend angepasst ist, um die Antriebseinheiten 14 aufnehmen zu können. Die Antriebseinheiten 14 können über eine Energieversorgung 16 mit Antriebsenergie versorgt werden. Zudem weist die rotorbetriebene Drohne gemäß Fig. 8 eine Steuereinrichtung 32 auf (zumindest Teile davon). Ferner sind an den Auslegern des Rahmens 20 jeweils Schnittstellen 22 angeordnet. Die Schnittstellen 22 dienen jeweils zur Aufnahme eines Dekontaminationsmoduls 24 des Satzes von Dekontaminationsmodulen 24 (hier nicht dargestellt).

Fig. 8 veranschaulicht anhand einer vereinfachten Darstellung die Verwendung eines Satzes aus unbemannten Luftfahrzeugen 12 eines Dekontaminationsbausatzes 10 zur Erzeugung eines sogenannten Sprühvorhangs 80. Bodengeführte Einrichtungen zur Erzeugung eines Sprühvorhangs sind bekannt. Ein Sprühvorhang kann generell zur Dekontamination mobiler Objekte 82 genutzt werden. Die Objekte 82 werden durch den Sprühvorhang hindurch bewegt und auf diese Weise dekontaminiert. Ein konventioneller Sprühvorhang umfasst üblicherweise eine Verrohrung mit mehreren Düsen, durch die ein Fluid ausgebracht wird. Ein solcher Sprühvorhang bzw. ein Portal zur Erzeugung eines Sprühvorhangs kann nun durch mehrere unbemannte Luftfahrzeuge 12 "simuliert" werden. Die unbemannten Luftfahrzeuge 12 sind jeweils mit einer Düsenanordnung 40 zur Ausbringung von Fluiden versehen.

Ein Vorteil dieser Gestaltung ist, dass die Größe des Sprühvorhangs 80 innerhalb bestimmter Grenzen wählbar ist, indem eine entsprechende Anzahl der Luftfahrzeuge 12 miteinander kombiniert wird. Die Luftfahrzeuge 12 können auch einen beweglichen Sprühvorhang 80 bilden, der sich entlang des Objektes 82 bewegt. Figur 8 zeigt beispielhaft drei Luftfahrzeuge 12, die gemeinsam den Sprühvorhang 80 bilden. Es versteht sich, dass weitere Luftfahrzeuge 12, oder eine andere, gestaffelte Anordnung der Luftfahrzeuge 12 nutzbar sind, um einen hinreichend homogenen Sprühvorhang 80 zu erzeugen. Wenn der Sprühvorhang 80 durch die unbemannten Luftfahrzeuge 12 erzeugt wird, sind keine händischen Installationsarbeiten erforderlich.

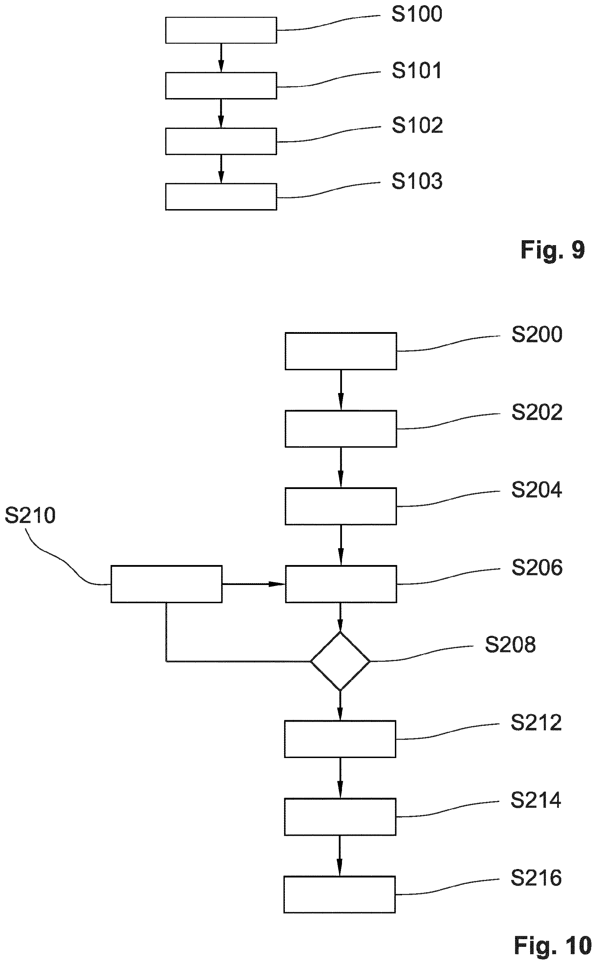

Fig. 9 zeigt ein Flussdiagramm zur Veranschaulichung eines Ausführungsbeispiels eines Verfahrens zur Dekontamination. In einem Schritt S100 erfolgt eine Bereitstellung eines unbemannten Luftfahrzeuges 12, insbesondere einer rotorbetriebenen Drohne, das eine Antriebseinheit 14, eine Energieversorgungseinheit 16 und zumindest eine Schnittstelle 22 zur Ankopplung eines Dekontaminationsmoduls 24 aufweist. In einem weiteren Schritt S101 erfolgt eine Bereitstellung einer Mehrzahl von Dekontaminationsmodulen 24 zur Ankopplung an die Schnittstelle 22 des Luftfahrzeugs 12, umfassend zumindest ein Diagnosemodul 26 zur Erfassung eines Dekontaminationszustands und zumindest ein Behandlungsmodul 30 zur Dekontamination. In einem weiteren Schritt S102 erfolgt eine Auswahl zumindest eines Dekontaminationsmoduls 24 aus dem bereitgestellten Satz von Dekontaminationsmodulen 24. In einem weiteren Schritt S103 erfolgt eine Kopplung (des zumindest einen Dekontaminationsmoduls mit der Schnittstelle des unbemannten Luftfahrzeugs.

Die eigentliche Dekontamination folgt regelmäßig einem vorgegebenen Ablauf. Fig. 10 beschreibt anhand eines Flussdiagramms eine beispielhafte Ausführungsform eines Verfahrens zur luftgestützten Dekontamination. Dies umfasst beispielsweise in einem ersten Schritt S200 eine geeignete Anordnung des Bausatzes, der Bestandteil eines Dekontaminationsplatzes sein kann, in Bezug auf ein zu dekontaminierendes Gebiet bzw. zu dekontaminierende Objekte. Der Dekontaminationsplatz kann auch als Operationsbasis für das unbemannte Luftfahrzeug dienen. Hierbei ist beispielsweise die vorherrschende Windrichtung zu beachten. Der Schritt S200 umfasst eine Inbetriebnahme des Dekontaminationsplatzes, also etwa auch vorbereitende Rüstarbeiten.

In einem folgenden Schritt S202 schließt sich beispielhaft ein sogenannter Orientierungsflug an, für den das unbemannte Luftfahrzeug mit einem Sensor bestückt ist. Es kann sich um Sensoren zur Erfassung von Kontaminanten handeln. Es ist jedoch auch vorstellbar, dass unbemannte Luftfahrzeug alternativ oder zusätzlich mit optischen Sensoren zu bestücken, etwa mit zumindest einer Kamera. Auf diese Weise kann ein Überblick über die Szenerie gewonnen werden. Die gewonnenen Daten können beispielhaft später für eine Teaching-basierte Steuerung verwendet werden. Ein Bediener kann auf diese Weise den Ablauf der Dekontaminationsprozedur zumindest teilweise vorgeben. Es versteht sich, dass die Dekontaminationsprozedur teilautomatisiert oder vollständig automatisiert ablaufen kann. Gleichwohl ist auch eine teilweise händische Steuerung (aus der Ferne bzw. aus einem geschützten Raum) vorstellbar.

In einem weiteren Schritt S204 kehrt das Luftfahrzeug zur Basis zurück. Dort erfolgt in Abhängigkeit von den im Schritt S202 gewonnenen Informationen eine Bestückung/Ausrüstung mit gewünschten Substanzen und Modulen zur Dekontamination. Dies kann beispielsweise die Auswahl bestimmter Chemikalien umfassen. Ferner kann dies die Auswahl bestimmter Module umfassen, mit deren Hilfe die Substanzen ausgebracht werden. Für den Fall, dass die Dekontamination ein Sammeln belasteter Substanzen umfasst, können entsprechende Module ausgewählt und genutzt werden. Es ist auch vorstellbar, dass nicht nur ein unbemanntes Luftfahrzeug, sondern mehrere unbemannte Luftfahrzeuge bestückt und zur Dekontamination eingesetzt werden.

Sodann folgt ein weiterer Schritt S206, der zumindest einen Dekontaminationsflug umfasst. In beispielhaften Ausführungsformen erfolgt die Steuerung des Dekontaminationsfluges teilautonom oder vollständig autonom. Die im Schritt S202 gewonnenen Informationen erlauben eine Definition der Ausbringmenge (zum Beispiel pro Flächeneinheit) sowie insgesamt der zu dekontaminierenden Fläche oder Objekte.

In einem nachgelagerten Entscheidungsschritt S208 wird geprüft, ob das Dekontaminationsziel erreicht wurde. Wenn dies nicht der Fall ist, erfolgt in einem Schritt S210 eine erneute Bestückung (Bevorratung) des unbemannten Luftfahrzeuges, insbesondere mit zwischenzeitlich verbrauchten Substanzen, woraufhin der Schritt S206 erneut durchgeführt wird. Vorzugsweise erfolgt die Rüstung/Beladung im Schritt S204 und gegebenenfalls das Nachfüllen im Schritt S210 unter Berücksichtigung der Tragfähigkeit und der maximalen Flugdauer des unbemannten Luftfahrzeuges. Auf diese Weise lässt sich ein Optimum für die Flugdauer im operativen Einsatz erreichen.

Sofern im Schritt S208 festgestellt wird, dass das Dekontaminationsziel erreicht wurde, folgt ein Schritt S212, der die Eigendekontamination umfasst. Die Eigendekontamination umfasst beispielsweise bei Verwendung eines einzigen unbemannten Luftfahrzeuges entsprechende Flugbewegungen, durch die sich das Luftfahrzeug selbst dekontaminieren kann. Bei Verwendung mehrerer unbemannter Luftfahrzeuge können sich diese beispielsweise gegenseitig dekontaminieren, wenn also ein unbemanntes Luftfahrzeug zumindest zeitweise für ein anderes Luftfahrzeug ein zu dekontaminierendes Objekt darstellt.

Die Eigendekontamination kann ferner auch die Dekontamination der Basis bzw. des Dekontaminationsplatzes umfassen. Auf diese Weise wird im Idealfall sichergestellt, dass der Bediener zu keiner Zeit mit potenziell kritischen Kontaminationsniveaus konfrontiert wird.

Es ist vorstellbar, in einem weiteren nachgelagerten Schritt S214 das unbemannte Luftfahrzeug erneut analog zum Schritt S202 mit sensorischen Equipment für einen Orientierungsflug auszurüsten. Sodann kann zu Zwecken der Überprüfung ein erneuter Orientierungsflug mit Sensorik erfolgen. Sofern im Schritt S214 festgestellt wird, dass die Dekontaminationsaufgabe tatsächlich erfüllt wurde, kann das Verfahren zu einem Schritt S216 übergehen. Der Schritt S216 umfasst beispielsweise eine teilautomatische oder händische Demontage und Verstauung des unbemannten Luftfahrzeuges.

## Patentansprüche

1. Bausatz (10) zur luftgestützten Dekontamination, mit
- zumindest einem unbemannten Luftfahrzeug (12), insbesondere einer rotorbetriebenen Drohne, das eine Antriebseinheit (14), eine Energieversorgung (16) und zumindest eine Schnittstelle (22) zur Ankopplung eines Dekontaminationsmoduls (24) aufweist;
- einem Satz von Dekontaminationsmodulen (24) zur Ankopplung an die Schnittstelle (22) des unbemannten Luftfahrzeugs (12), umfassend zumindest ein Diagnosemodul (26) zur Erfassung eines Kontaminationszustands, und zumindest ein Behandlungsmodul (30) zur Dekontamination,
wobei das zumindest eine Diagnosemodul (26) zumindest einen Sensor (28) zur Erfassung des Kontaminationszustands aufweist, und
wobei das zumindest eine Behandlungsmodul (30) zur Erzeugung und/oder zur Nutzung einer Fluidströmung zu Dekontaminationszwecken ausgebildet ist; und
- einer Steuereinrichtung (32) für das unbemannte Luftfahrzeug (12).

2. Bausatz zur luftgestützten Dekontamination nach Anspruch 1, wobei zumindest ein Betriebsmodus der Steuereinrichtung (32) zur Eigendekontamination des unbemannten Luftfahrzeugs (12) ausgebildet ist.

3. Bausatz zur luftgestützten Dekontamination nach Anspruch 2, wobei die Steuereinrichtung (32) zur Durchführung einer Eigendekontaminationsprozedur ausgebildet ist, durch die das unbemannte Luftfahrzeug (12) veranlasst wird, Flugmanöver zur Eigendekontamination auszuführen.

4. Bausatz zur luftgestützten Dekontamination nach Anspruch 2 oder 3, umfassend zumindest zwei unbemannte Luftfahrzeuge (12), die dazu ausgebildet sind, sich in einem Eigendekontaminationsmodus gegenseitig zu dekontaminieren.

5. Bausatz zur luftgestützten Dekontamination nach einem der Ansprüche 1 bis 4, wobei zumindest ein Dekontaminationsmodul (24) als Schaumgenerator (55) ausgestaltet ist, und wobei zumindest ein Druckspeicher (46) und/oder Druckerzeuger (47) zur Bereitstellung eines Druckmittels, insbesondere eines gasförmigen Druckmittels, vorgesehen ist.

6. Bausatz zur luftgestützten Dekontamination nach Anspruch 5, wobei der zumindest eine Druckspeicher (46) und/oder Druckerzeuger (47) bodenseitig angeordnet und über eine Druckleitung (48) mit dem zumindest einen unbemannten Luftfahrzeug (12) gekoppelt ist.

7. Bausatz zur luftgestützten Dekontamination nach Anspruch 6, wobei der zumindest eine Druckspeicher (46) und/oder Druckerzeuger (47) an dem zumindest einen Luftfahrzeug (12) angeordnet ist.

8. Bausatz zur luftgestützten Dekontamination nach einem der Ansprüche 1 bis 7, ferner aufweisend eine Bedieneinrichtung (64), die dazu eingerichtet ist, kabelgebunden und/oder kabellos mit dem unbemannten Luftfahrzeug (12) zu kommunizieren, wobei das zumindest eine unbemannte Luftfahrzeug (12) vorzugsweise über eine Datenverbindung (66) steuerbar ist, die einen Flugsteuerungskanal (68) zur Flugsteuerung und einen Dekontaminationskanal (70) zur Steuerung des zumindest einen Dekontaminationsmoduls (24) aufweist.

9. Bausatz zur luftgestützten Dekontamination nach einem der Ansprüche 1 bis 8, wobei das unbemannte Luftfahrzeug (12) ferner steuerbare Leitelemente (72) zur Strömungsführung aufweist.

10. Bausatz zur luftgestützten Dekontamination nach einem der Ansprüche 1 bis 9, wobei zumindest ein Dekontaminationsmodul (24) zur Erzeugung eines Unterdrucks zur Aufnahme loser Kontaminanten ausgebildet ist.

11. Bausatz zur luftgestützten Dekontamination nach einem der Ansprüche 1 bis 10, umfassend zwei oder mehr unbemannte Luftfahrzeuge (12), die zur Kommunikation miteinander ausgebildet sind, wobei die zwei oder mehr unbemannten Luftfahrzeuge (12) zur Erhöhung der Dekontaminationsleistung miteinander funktional koppelbar (74) sind.

12. Bausatz zur luftgestützten Dekontamination nach Anspruch 11, wobei die Steuereinrichtung (32) dazu ausgebildet ist, die zwei oder mehr unbemannten Luftfahrzeuge (12) gemeinsam zu positionieren und zu betreiben, um einen Sprühvorhang (80) zu bilden.

13. Bausatz zur luftgestützten Dekontamination nach einem der Ansprüche 1 bis 12, ferner umfassend zumindest eines der folgenden Merkmale:
a) zumindest ein Vorratsbehälter (36) für ein Dekontaminationsmittel ist an dem unbemannten Luftfahrzeug (12) angeordnet und/oder mit diesem gekoppelt;
b) zumindest ein Behandlungsmodul (30) zur Dekontamination ist dazu eingerichtet, ein flüssiges, pulverförmiges und/oder gasförmiges Dekontaminationsmittel zu zerstäuben;
c) zumindest ein Behandlungsmodul (30) ist zur nasschemischen Dekontamination ausgebildet;
d) das Behandlungsmodul (30) zur nasschemischen Dekontamination ist mit zumindest einer bodengebundenen Dekontaminationsmittel-Versorgungsleitung (38) für ein Dekontaminationsmittel verbindbar;
e) das Behandlungsmodul (30) ist dazu eingerichtet, ein Dekontaminationsmittel und/oder eine mit einem Dekontaminationsmittel versehenen Dekontaminationsmittellösung auszubringen;
f) zumindest ein Dekontaminationsmodul (24) ist als Überwachungsmodul (50) zur Überwachung des Dekontaminationsablaufs ausgebildet.
g) der Satz von Dekontaminationsmodulen (24) weist Dekontaminationsmodule (24) für eine mehrstufige Dekontamination auf, insbesondere zur Vorbehandlung, Hauptbehandlung und/oder Nachbehandlung;
h) das unbemannte Luftfahrzeug (12) ist mit zumindest einem ersten bildgebenden Sensor (52) versehen, wobei über die Steuereinrichtung (32) eine Steuerung des unbemannten Luftfahrzeugs (12) für einen Bediener ohne direkte Sicht ermöglicht ist;
i) die Energieversorgung (16) umfasst eine kabelgebundene Energieversorgungsverbindung (18);
j) eine Düsenanordnung (40) mit zumindest einer Düse (42) ist vorgesehen, die das Dekontaminationsmittel gezielt in die Eigenluftströmung des unbemannten Luftfahrzeugs (12) einbringt, wobei die zumindest eine Düse (42) vorzugsweise dazu eingerichtet ist, ein punktförmiges, linienförmiges oder flächenförmiges Strahlbild zu erzeugen;
k) die Steuereinrichtung (32) ist separat von dem unbemannten Luftfahrzeug (12) angeordnet oder zumindest teilweise in dieses integriert;
l) die Steuereinrichtung (32) weist zumindest einen Betriebsmodus auf, in dem die Antriebseinheit (14) des zumindest einen unbemannten Luftfahrzeugs (12) derart angesteuert wird, dass eine gezielte Richtung der Eigenluftströmung des unbemannten Luftfahrzeugs (12) auf ein Dekontaminationsobjekt (54, 54') ermöglicht ist;
m) die Steuereinrichtung (32) ist zur Erkennung von Strukturen auf Basis von Bildinformationen, die durch den zumindest ersten bildgebenden Sensor (52) bereitgestellt werden, ausgebildet;
n) die Steuereinrichtung (32) ist dazu ausgestaltet, auf Basis von Bildinformationen, die durch den zumindest ersten bildgebenden Sensor (52) bereitgestellt werden, einen Kontaminationsgrad zu bestimmen;
o) das zumindest eine unbemannte Luftfahrzeug (12) ist mit zumindest einem Abstandsensor (58) versehen, um eine Umgebung des unbemannten Luftfahrzeugs (12) zu überwachen;
p) die Steuereinrichtung (32) ist dazu ausgestaltet, die Bildinformationen und Abstandsinformationen miteinander zu verknüpfen;
q) das zumindest eine Diagnosemodul (26) ist zur Aufnahme und vorzugsweise zur Auswertung von Proben am Dekontaminationsobjekt (54, 54') ausgebildet;
r) das zumindest eine unbemannte Luftfahrzeug (12) weist einen zweiten bildgebende Sensor (62) auf, über den gemeinsam mit dem ersten bildgebenden Sensor (52) ein räumliches Bild erzeugbar ist;
s) zumindest ein Dekontaminationsmodul (24) weist Rotationsdüsen (44) zur Erhöhung der Dekontaminationsleistung auf;
t) zumindest ein Dekontaminationsmodul (24) weist einen Nebelgenerator (56), insbesondere einen Feinnebelgenerator, auf;
u) zumindest ein Dekontaminationsmodul (24) ist zur Erzeugung von thermischer Energie und/oder von energetischer Strahlung zu Dekontaminationszwecken ausgebildet;
v) zumindest ein Dekontaminationsmodul (24) ist vorgesehen, das zur Ausbringung eines Dekontaminationsmittels, insbesondere in Form einer Zerstäubung, unter Nutzung der der zur Erzeugung des Auftriebs genutzten Eigenluftströmung des unbemannten Luftfahrzeugs (12) ausgebildet ist.

14. Verfahren zur luftgestützten Dekontamination, mit den folgenden Schritten:
- Bereitstellung (S100) eines unbemannten Luftfahrzeugs (12), insbesondere einer rotorbetriebenen Drohne, das eine Antriebseinheit (14), eine Energieversorgung (16) und zumindest eine Schnittstelle (22) zur Ankopplung eines Dekontaminationsmoduls aufweist;
- Bereitstellung (S101) einer Mehrzahl von Dekontaminationsmodulen (24) zur Ankopplung an die Schnittstelle (22) des unbemannten Luftfahrzeugs (12), umfassend zumindest ein Diagnosemodul (26) zur Erfassung eines Kontaminationszustands, und zumindest ein Behandlungsmodul (30) zur Dekontamination;
- Auswahl (S102) zumindest eines Dekontaminationsmoduls (24) aus der bereitgestellten Satz von Dekontaminationsmodulen (24);
- Kopplung (S103) des zumindest einen Dekontaminationsmoduls (24) mit der Schnittstelle (22) des unbemannten Luftfahrzeugs (12); und
- Durchführung einer Dekontamination.

15. Verwendung eines unbemannten Luftfahrzeugs (12), insbesondere einer rotorbetriebenen Drohne, zur Durchführung des Verfahrens zur luftgestützten Dekontamination nach Anspruch 14, insbesondere zur luftgestützten Dekontamination im Rahmen militärischer und/oder humanitärer Operationen.

## Claims

1. A kit (10) for airborne decontamination, comprising
- at least one unmanned aerial vehicle (12), in particular a rotor-powered drone, which comprises a drive unit (14), a power supply (16) and at least one interface (22) for coupling a decontamination module (24);
- a set of decontamination modules (24) for coupling to the interface (22) of the unmanned aerial vehicle (12), comprising at least one diagnostic module (26) for detecting a contamination condition, and at least one treatment module (30) for decontamination,
wherein the at least one diagnostic module (26) comprises at least one sensor (28) for detecting the contamination state, and
wherein the at least one treatment module (30) is configured for generating and/or utilizing a fluid flow for decontamination purposes; and
- a control device (32) for the unmanned aerial vehicle (12).

2. The kit for airborne decontamination according to claim 1, wherein at least one operating mode of the control device (32) is configured for self-decontamination of the unmanned aerial vehicle (12).

3. The kit for airborne decontamination according to claim 2, wherein the control device (32) is configured for performing a self-decontamination procedure by which the unmanned aerial vehicle (12) is caused to perform flight maneuvers for self-decontamination.

4. The kit for airborne decontamination according to claim 2 or 3, comprising at least two unmanned aerial vehicles (12) configured for decontaminating each other in a self-decontamination mode.

5. The kit for airborne decontamination according to any one of claims 1 to 4, wherein at least one decontamination module (24) is configured as a foam generator (55), and wherein at least one pressure reservoir (46) and/or pressure generator (47) is provided for providing a pressure medium, in particular a gaseous pressure medium.

6. The kit for airborne decontamination according to claim 5, wherein the at least one pressure reservoir (46) and/or pressure generator (47) is arranged on the ground side and coupled to the at least one unmanned aerial vehicle (12) via a pressure line (48).

7. The kit for airborne decontamination according to claim 6, wherein the at least one pressure reservoir (46) and/or pressure generator (47) is arranged on the at least one aerial vehicle (12).

8. The kit for airborne decontamination according to any one of claims 1 to 7, further comprising an operating device (64) configured to communicate with the unmanned aerial vehicle (12) in a wired and/or wireless manner, wherein the at least one unmanned aerial vehicle (12) is preferably controllable via a data link (66) that comprises a flight control channel (68) for flight control and a decontamination channel (70) for controlling the at least one decontamination module (24).

9. The kit for airborne decontamination according to any one of claims 1 to 8, wherein the unmanned aerial vehicle (12) further comprises controllable guidance elements (72) for flow control.

10. The kit for airborne decontamination according to any one of claims 1 to 9, wherein at least one decontamination module (24) is configured for generating a negative pressure for collecting loose contaminants.

11. The kit for airborne decontamination according to any one of claims 1 to 10, comprising two or more unmanned aerial vehicles (12) that are configured for communicating with each other, wherein the two or more unmanned aerial vehicles (12) are functionally coupleable (74) to each other to increase the decontamination performance.

12. The kit for airborne decontamination according to claim 11, wherein the control device (32) is configured for positioning and operating the two or more unmanned aerial vehicles (12) together to form a spray curtain (80).

13. The kit for airborne decontamination according to any one of claims 1 to 12, further comprising at least one of the following features:
(a) at least one storage container (36) for a decontamination agent is arranged on and/or coupled to the unmanned aerial vehicle (12);
b) at least one treatment module (30) for decontamination is configured to atomize a liquid, powdered and/or gaseous decontamination agent;
c) at least one treatment module (30) is configured for wet chemical decontamination;
d) the treatment module (30) for wet chemical decontamination is connectable to at least one ground-based decontamination agent supply line (38) for a decontamination agent;
e) the treatment module (30) is configured for applying a decontamination agent and/or a decontamination agent solution provided with a decontamination agent;
f) at least one decontamination module (24) is configured as a monitoring module (50) for monitoring the decontamination process.
g) the set of decontamination modules (24) comprises decontamination modules (24) for multi-stage decontamination, in particular for pre-treatment, main treatment and/or post-treatment;
h) the unmanned aerial vehicle (12) is provided with at least a first imaging sensor (52), wherein control of the unmanned aerial vehicle (12) is enabled via the control device (32) for an operator without direct vision;
i) the power supply (16) comprises a wired power supply connection (18);
j) a nozzle arrangement (40) with at least one nozzle (42) is provided, which selectively introduces the decontamination agent into the inherent airflow of the unmanned aerial vehicle (12), wherein the at least one nozzle (42) is preferably set up to generate a point-shaped, line-shaped or area-shaped spray pattern;
k) the control device (32) is arranged separately from or at least partially integrated into the unmanned aerial vehicle (12);
l) the control device (32) comprises at least one operating mode in which the drive unit (14) of the at least one unmanned aerial vehicle (12) is controlled in such a way that a targeted direction of the inherent air flow of the unmanned aerial vehicle (12) onto a decontamination object (54, 54') is enabled;
m) the control device (32) is configured for recognizing structures on the basis of image information provided by the at least first imaging sensor (52);
n) the control device (32) is configured to determine a degree of contamination based on image information provided by the at least first imaging sensor (52);
o) the at least one unmanned aerial vehicle (12) is provided with at least one distance sensor (58) to monitor an environment of the unmanned aerial vehicle (12);
p) the control device (32) is designed to link the image information and distance information with each other;
q) the at least one diagnostic module (26) is configured for receiving and preferably evaluating samples at the decontamination object (54, 54');
r) the at least one unmanned aerial vehicle (12) comprises a second imaging sensor (62), by means of which a spatial image can be generated together with the first imaging sensor (52);
s) at least one decontamination module (24) comprises rotating nozzles (44) for increasing the decontamination performance;
t) at least one decontamination module (24) comprises a mist generator (56), in particular a fine mist generator;
u) at least one decontamination module (24) is arranged for generating thermal energy and/or energetic radiation for decontamination purposes;
v) at least one decontamination module (24) is provided, which is configured for applying a decontamination agent, in particular in the form of an atomization, using the inherent airflow of the unmanned aerial vehicle (12) that is used to generate uplift.

14. A method for airborne decontamination, comprising the following steps:
- providing (S100) an unmanned aerial vehicle (12), in particular a rotor-powered drone, which comprises a drive unit (14), a power supply (16) and at least one interface (22) for coupling a decontamination module;
- providing (S101) a plurality of decontamination modules (24) for coupling to the interface (22) of the unmanned aerial vehicle (12), comprising at least one diagnostic module (26) for detecting a contamination condition, and at least one treatment module (30) for decontamination;
- selecting (S102) at least one decontamination module (24) from the provided set of decontamination modules (24);
- coupling (S103) the at least one decontamination module (24) to the interface (22) of the unmanned aerial vehicle (12); and
- execution of decontamination.

15. A use of an unmanned aerial vehicle (12), in particular a rotor-powered drone, for carrying out the method for airborne decontamination according to claim 14, in particular for airborne decontamination in the context of military and/or humanitarian operations.

## Revendications

1. Ensemble (10) de décontamination aéroportée, comportant
- au moins un aéronef sans pilote embarqué (12), en particulier un drone entraîné par rotor, lequel drone comprend une unité d'entraînement (14), une alimentation en énergie (16) et au moins une interface (22) pour l'accouplement d'un module de décontamination (24) ;
- un jeu de modules de décontamination (24) pour l'accouplement à l'interface (22) de l'aéronef sans pilote embarqué (12), comportant au moins un module de diagnostic (26) pour la détection d'un état de contamination et au moins un module de traitement (30) pour la décontamination,
l'au moins un module de diagnostic (26) comprenant au moins un capteur (28) pour la détection de l'état de contamination, et
l'au moins un module de traitement (30) étant réalisé pour la génération et/ou l'utilisation d'un écoulement de fluide à des fins de décontamination ; et
- un dispositif de commande (32) pour l'aéronef sans pilote embarqué (12).

2. Ensemble de décontamination aéroportée selon la revendication 1, au moins un mode de fonctionnement du dispositif de commande (32) étant réalisé pour l'auto-décontamination de l'aéronef sans pilote embarqué (12).

3. Ensemble de décontamination aéroportée selon la revendication 2, le dispositif de commande (32) étant réalisé pour la mise en oeuvre d'une procédure d'auto-décontamination, par laquelle l'aéronef sans pilote embarqué (12) est amené à effectuer des manœuvres de vol pour l'auto-décontamination.

4. Ensemble de décontamination aéroportée selon la revendication 2 ou 3, comportant au moins deux aéronefs sans pilote embarqué (12), qui sont réalisés pour se décontaminer mutuellement dans un mode d'auto-décontamination.

5. Ensemble de décontamination aéroportée selon l'une des revendications 1 à 4, au moins un module de décontamination (24) étant configuré comme générateur de mousse (55), et au moins un accumulateur de pression (46) et/ou générateur de pression (47) servant à produire un fluide sous pression, en particulier un fluide sous pression gazeux, étant prévus.

6. Ensemble de décontamination aéroportée selon la revendication 5, l'au moins un accumulateur de pression (46) et/ou générateur de pression (47) étant disposés côté sol et étant accouplés à l'au moins un aéronef sans pilote embarqué (12) par le biais d'une conduite sous pression (48).

7. Ensemble de décontamination aéroportée selon la revendication 6, l'au moins un accumulateur de pression (46) et/ou générateur de pression (47) étant disposés sur l'au moins un aéronef sans pilote embarqué (12).

8. Ensemble de décontamination aéroportée selon l'une des revendications 1 à 7, comprenant en outre un dispositif de commande (64), qui est conçu pour communiquer de manière filaire et/ou sans fil avec l'aéronef sans pilote embarqué (12), l'au moins un aéronef sans pilote embarqué (12) pouvant être commandé de préférence par le biais d'une liaison de données (66) qui comprend un canal de commande de vol (68) pour la commande de vol et un canal de décontamination (70) pour la commande de l'au moins un module de décontamination (24).

9. Ensemble de décontamination aéroportée selon l'une des revendications 1 à 8, l'aéronef sans pilote embarqué (12) comprenant en outre des éléments de guidage (72) pouvant être commandés pour le guidage de l'écoulement.

10. Ensemble de décontamination aéroportée selon l'une des revendications 1 à 9, au moins un module de décontamination (24) étant réalisé pour la génération d'une dépression pour la réception de contaminants libres.

11. Ensemble de décontamination aéroportée selon l'une des revendications 1 à 10, comportant deux ou plus de deux aéronefs sans pilote embarqué (12), qui sont réalisés pour la communication entre eux, les deux ou plus de deux aéronefs sans pilote embarqué (12) pouvant être accouplés (74) fonctionnellement entre eux pour l'augmentation de la capacité de décontamination.

12. Ensemble de décontamination aéroportée selon la revendication 11, le dispositif de commande (32) étant réalisé pour positionner et pour faire fonctionner conjointement les deux ou plus de deux aéronefs sans pilote embarqué (12), afin de former un rideau de pulvérisation (80).

13. Ensemble de décontamination aéroportée selon l'une des revendications 1 à 12, présentant en outre au moins l'une des caractéristiques suivantes :
a) au moins un récipient de stockage (36) pour un agent de décontamination est disposé sur l'aéronef sans pilote embarqué (12) et/ou accouplé à celui-ci ;
b) au moins un module de traitement (30) pour la décontamination est conçu pour pulvériser un agent de décontamination liquide, pulvérulent et/ou gazeux ;
c) au moins un module de traitement (30) est réalisé pour la décontamination par voie chimique humide ;
d) le module de traitement (30) pour la décontamination par voie chimique humide peut être relié à au moins une conduite d'alimentation en agent de décontamination (38), liée au sol, pour un agent de décontamination ;
e) le module de traitement (30) est conçu pour épandre un agent de décontamination et/ou une solution d'agent de décontamination dotée d'un agent de décontamination ;
f) au moins un module de décontamination (24) est réalisé comme module de surveillance (50) pour la surveillance du déroulement de la décontamination ;
g) le jeu de modules de décontamination (24) comprend des modules de décontamination (24) pour une décontamination en plusieurs étapes, en particulier pour le pré-traitement, le traitement principal et/ou le post-traitement ;
h) l'aéronef sans pilote embarqué (12) est doté d'au moins un premier capteur d'imagerie (52), une commande de l'aéronef sans pilote embarqué (12) par un opérateur sans vue directe étant rendue possible par le biais du dispositif de commande (32) ;
i) l'alimentation en énergie (16) comporte une liaison filaire d'alimentation en énergie (18) ;
j) un ensemble de buses (40) comportant au moins une buse (42) est prévu, lequel introduit de manière ciblée l'agent de décontamination dans l'écoulement d'air propre de l'aéronef sans pilote embarqué (12), l'au moins une buse (42) étant de préférence conçue pour générer une forme de jet ponctuelle, linéaire ou plane ;
k) le dispositif de commande (32) est disposé de manière séparée de l'aéronef sans pilote embarqué (12) ou est intégré au moins partiellement dans celui-ci ;
l) le dispositif de commande (32) présente au moins un mode de fonctionnement dans lequel l'unité d'entraînement (14) de l'au moins un aéronef sans pilote embarqué (12) est commandée de telle sorte qu'une direction ciblée de l'écoulement d'air propre de l'aéronef sans pilote embarqué (12) vers un objet à décontaminer (54, 54') est rendue possible ;
m) le dispositif de commande (32) est réalisé pour la reconnaissance de structures sur la base d'informations d'imagerie qui sont fournies par l'au moins un premier capteur d'imagerie (52) ;
n) le dispositif de commande (32) est configuré pour déterminer un degré de contamination sur la base d'informations d'imagerie qui sont fournies par l'au moins un premier capteur d'imagerie (52) ;
o) l'au moins un aéronef sans pilote embarqué (12) est doté d'au moins un capteur de distance (58), pour surveiller un environnement de l'aéronef sans pilote embarqué (12) ;
p) le dispositif de commande (32) est configuré pour combiner les informations d'imagerie et les informations de distance entre elles ;
q) l'au moins un module de diagnostic (26) est réalisé pour la réception et de préférence pour l'évaluation d'échantillons au niveau de l'objet à décontaminer (54, 54') ;
r) l'au moins un aéronef sans pilote embarqué (12) comprend un deuxième capteur d'imagerie (62), par le biais duquel une image spatiale peut être générée conjointement avec le premier capteur d'imagerie (52) ;
s) au moins un module de décontamination (24) comprend des buses rotatives (44) pour l'augmentation de la capacité de décontamination ;
t) au moins un module de décontamination (24) comprend un générateur de brouillard (56), en particulier un générateur de brouillard fin ;
u) au moins un module de décontamination (24) est réalisé pour la génération d'énergie thermique et/ou de rayonnement énergétique à des fins de décontamination ;
v) au moins un module de décontamination (24) est prévu, lequel est réalisé pour l'épandage d'un agent de décontamination, en particulier sous la forme d'une pulvérisation, en utilisant l'écoulement d'air propre, utilisé pour la génération de la portance, de l'aéronef sans pilote embarqué (12).

14. Procédé de décontamination aéroportée, comportant les étapes suivantes :
- fourniture (S100) d'un aéronef sans pilote embarqué (12), en particulier d'un drone entraîné par rotor, lequel drone comprend une unité d'entraînement (14), une alimentation en énergie (16) et au moins une interface (22) pour l'accouplement d'un module de décontamination ;
- fourniture (S101) d'une pluralité de modules de décontamination (24) pour l'accouplement à l'interface (22) de l'aéronef sans pilote embarqué (12), comportant au moins un module de diagnostic (26) pour la détection d'un état de contamination, et au moins un module de traitement (30) pour la décontamination ;
- sélection (S102) d'au moins un module de décontamination (24) parmi l'ensemble fourni de modules de décontamination (24) ;
- accouplement (S103) de l'au moins un module de décontamination (24) à l'interface (22) de l'aéronef sans pilote embarqué (12) ; et
- mise en oeuvre d'une décontamination.

15. Utilisation d'un aéronef sans pilote embarqué (12), en particulier d'un drone entraîné par rotor, pour la mise en oeuvre du procédé de décontamination aéroportée selon la revendication 14, en particulier pour la décontamination aéroportée dans le cadre d'opérations militaires et/ou humanitaires.
